# EUROPÄISCHE PATENTANMELDUNG

(11) **EP 4 484 081 A1**
(43) Veröffentlichungstag der Anmeldung: **01.01.2025**
(21) Anmeldenummer: 24185470.2
(22) Anmeldetag: 28.06.2024
(51) Int. Cl.: B25J 13/08, B25J 9/16, B25J 15/02, B25J 19/02, B25J 19/06

(54) **VERFAHREN UND VORRICHTUNG ZUM UMLEGEN VON GÜTERN MITTELS TEILELASTISCHEN HALTELEMENTEN**

(30) Priorität: 30.06.2023 DE 102023117351
(71) Anmelder: B1B2 Renz GmbH, 93053 Regensburg (DE)
(72) Erfinder: Michael, Renz, verstorben (DE)
(74) Vertreter: MFG Patentanwälte Meyer-Wildhagen Meggle-Freund Gerhard PartG mbB

(57) **Zusammenfassung**

Die Erfindung betrifft ein Verfahren zum Betrieb einer Greifvorrichtung, aufweisend eine Greifanordnung mit Haltelementen, welche eine teilweise elastisch verformbare Struktur aufweisen, zum Halten eines umzuschlagenden Gutes, umfassend eine Messung eines Spannungszustandes wenigstens eines der Haltelemente mittels Spannungsmessvorrichtungen; und Ermittlung eines momentanen Betriebszustandes der Greifvorrichtung auf Basis des Spannungszustandes des Haltelements; und Steuerung der Greifvorrichtung auf Basis des ermittelten Betriebszustandes.

## Beschreibung

### GEBIET DER ERFINDUNG

Die vorliegende Erfindung bezieht sich allgemein und insbesondere auf ein Verfahren und eine Vorrichtung zur maschinellen Umlage von umzulegenden Gütern.

### HINTERGRUND DER ERFINDUNG

Es sind allgemein Greifanordnungen zur Verwendung in Greifvorrichtungen bekannt, die beispielsweise dazu dienen, automatisiert Baustofflagen zu handhaben. Insbesondere sind Greifanordnungen bekannt, welche Haltelemente umfassen, die zumindest teilweise aus einem elastischen Werkstoff gefertigt sind. Die Greifanordnung wird dabei in eine Haltestellung gebracht, in der zwischen dem zu haltenden Gegenstand und den Haltelementen eine Haltekraft wirkt, die so groß ist, dass eine, insbesondere reibschlüssige, Kopplung zwischen den Haltelementen und den Baustoffelementen erreicht wird, so dass in dieser Stellung die Baustoffelemente (eine Reihe oder eine komplette Lage) mit der Greifanordnung aufgenommen werden kann und von einer Stelle zur anderen umgesetzt werden können. Elastisch ausgestaltete Haltelemente können gegenüber inelastisch ausgestalteten Haltelementen verbesserte Eigenschaften aufweisen, welche sich beispielsweise in verringerter Empfindlichkeit gegenüber Beanspruchungen ausdrücken, welche bei nicht sachgemäßem Gebrauch auftreten. Beispielsweise kann ein elastisch ausgeführtes Haltelement eine höhere Toleranz gegenüber Beanspruchungen aufweisen, welche sich in einer Krafteinleitung in einer Richtung, welche senkrecht zur vorgesehenen Haltekraft, die auf, beispielsweise, einen zu haltenden Gegenstand eingebracht wird, ausdrücken. Außerdem kann unter Verwendung von elastisch ausgeführten Haltelementen gegenüber inelastisch ausgeführten Haltelementen eine strukturelle Überbeanspruchung des zu haltenden Gegenstands vermieden werden, da sich das Haltelement gegenüber dem durch den zu haltenden Gegenstand der Haltekraft entgegengesetzten Widerstand elastisch verformen kann. Ein solches Haltelement kann zusätzlich mit Sensoreinheiten ausgestattet sein, welche Rückschlüsse auf einen Zustand des Haltelements zulassen.

Beispielsweise beschreibt die Patentschrift EP3173195A1 ein Haltelement mit einem Laschenkörper mit einem Befestigungsbereich, an dem der Laschenkörper an einer Trägervorrichtung fixierbar ist, und einem Haltebereich, über den eine Haltekraft auf einen zu haltenden Gegenstand aufbringbar ist, sowie auf eine Greiferanordnung, insbesondere eine Baustoffgreiferanordnung, mit einem solchen Haltelement.

Für elektronisch und maschinell angesteuerte Greifanordnungen ist es mithin nützlich, Informationen über einen Betriebszustand der Haltelemente zu messen und in der Steuerung der Greifanordnung einzusetzen. Dazu geeignete Verfahren und Vorrichtungen liegen im Stand der Technik vor.

EP 1645374 B1 beschreibt beispielsweise eine Greifhand mit mehreren Fingermechanismen, die jeweils mit Fingergelenken, Aktuatoren zum Antreiben der Fingergelenke und Verbindungsgliedern versehen sind, die von den Fingergelenken getragen werden und unter der Antriebskraft der Aktuatoren arbeiten. Die beschriebene Greifhand umfasst einen Betriebssteuerabschnitt, der in der Lage ist, jeweils die Aktuatoren der Mehrzahl von Fingermechanismen unabhängig voneinander zu steuern, einen Positionserfassungsabschnitt zum jeweiligen Erfassen von Betriebspositionen der Fingergelenke der Vielzahl von Fingermechanismen; und Belastungserfassungsabschnitte, die jeweils für die mehreren Fingermechanismen vorgesehen sind und Belastungen erfassen, die in den Gliedern aufgrund einer auf die Fingermechanismen ausgeübten Kraft erzeugt werden. Der Betriebssteuerabschnitt steuert koordiniert die Aktuatoren der mehreren Fingermechanismen, um die von den mehreren Fingermechanismen erzeugte Greifkraft einzustellen, basierend auf den von dem Positionserfassungsabschnitt erfassten Betriebspositionen der Fingergelenke und den von den Belastungserfassungsabschnitte erfassten Belastungen der Glieder.

Die Verwendung von teilweise elastisch ausgeführten Haltelementen in einer Greifanordnung führt zu der Notwendigkeit, ein Verfahren bereit zu stellen, welches den Betriebsbedingungen eines elastisch verformbaren Haltelements gerecht wird. Es ist außerdem vorteilhaft, die elastische Verformbarkeit des Haltelements zu nutzen, um Informationen über einen Zustand des zu haltenden Gegenstands zu erlangen und diese zur Steuerung der Greifanordnung zu nutzen. Der Betriebszustand einer Greifanordnung mit elastisch verformbaren Haltelementen, insbesondere in Bezug auf die verspannungsbedingte Verformung, ist weniger definit festgelegt als bei nicht oder weniger stark elastisch verformbaren Haltelementen.

Aufgabe der vorliegenden Offenbarung ist es daher, ein Verfahren zur Steuerung von Greifanordnungen, welche elastisch verformbare Haltelemente beinhalten, zur Verfügung zu stellen, welches eine Steuerung auf Basis von Informationen zu einem Betriebszustand der Greifanordnung durchführt und dabei auf Informationen zurückgreift, welche auf der Messung des Spannungszustandes des Haltelements beruhen. Es ist außerdem Aufgabe der vorliegenden Offenbarung, eine Greifanordnung bereitzustellen, welche in der Lage ist, den Spannungszustand der Haltelemente zu messen und, basierend auf dem gemessenen Spannungszustand, eine Steuerung der Greifvorrichtung vorzunehmen. Es ist darüber hinaus Aufgabe der vorliegenden Offenbarung, eine Verwendung einer Greifanordnung, welche in der Lage ist, den Spannungszustand der Haltelemente zu messen, zur Durchführung des offenbarungsgemäßen Verfahrens bereitzustellen.

### ZUSAMMENFASSUNG DER ERFINDUNG

Nach einem ersten Aspekt stellt die vorliegende Erfindung ein Verfahren entsprechend unabhängigem Anspruch 1, nach einem zweiten Aspekt eine Greifvorrichtung nach unabhängigem Anspruch 16 und nach einem dritten Aspekt eine Verwendung nach unabhängigem Anspruch 17 bereit.

Weitere Aspekte und Merkmale der vorliegenden Erfindung ergeben sich aus den abhängigen Ansprüchen, der beigefügten Zeichnung und der nachfolgenden Beschreibung bevorzugter Ausführungsformen.

### KURZBESCHREIBUNG DER ZEICHNUNGEN

Ausführungsformen der Erfindung werden nun beispielhaft und unter Bezugnahme auf die beigefügte Zeichnung beschrieben, in der:
Fig. 1 schematisch eine mit einer ersten Ausführungsform des Verfahrens in Übereinstimmung mit der vorliegenden Offenbarung veranschaulicht; und
Fig. 2A eine Seitenansicht eines Haltelements, beim Betrieb dessen eine Ausführungsform das offenbarungsgemäße Verfahren zur Anwendung kommen kann, veranschaulicht; und
Fig. 2B eine Seitenansicht eines Haltelements, beim Betrieb dessen eine Ausführungsform das offenbarungsgemäße Verfahren zur Anwendung kommen kann, veranschaulicht; und
Fig. 3 eine Greifanordnung, beim Betrieb derer eine Ausführungsform das offenbarungsgemäße Verfahren zur Anwendung kommen kann, veranschaulicht; und
Fig. 4 schematisch eine Messung eines Spannungszustandes und einer Haltekraft in Übereinstimmung mit der vorliegenden Offenbarung veranschaulicht; und
Fig. 5 schematisch eine Steuerung einer Greifvorrichtung auf Basis der Messung des Spannungszustands eines Haltelements veranschaulicht; und
Fig. 6 schematisch eine Generierung einer Kalibration anhand von Testvorgängen zeigt; und
Fig. 7 schematisch eine Generierung einer Kalibration anhand von Finite-Element-Methode Rechnungen zeigt; und
Fig. 8 schematisch ein Verfahren für eine Ermittlung eines Zustands eines umzuschlagenden Gutes zeigt; und
Fig. 9 schematisch eine Ermittlung eines Betriebszustands auf Basis der Messung des Spannungszustands eines Haltelements veranschaulicht; und
Fig. 10 schematisch eine Ermittlung eines asymmetrischen Spannungszustands auf Basis der Messung des Spannungszustands eines Haltelements veranschaulicht; und
Fig. 11 schematisch eine Optimierung eines Betriebszyklus auf Basis der Messung des Spannungszustands eines Haltelements veranschaulicht; und
Fig. 12 schematisch die Ermittlung der zeitlichen Entwicklung eines beispielhaften Spannungszustands anhand eines Haltelements illustriert; und
Fig. 13A schematisch eine Messung eines ersten beispielhaften Spannungszustandes eines Haltelements durch Sensoreinheiten zeigt; und
Fig. 13B schematisch eine Messung eines zweiten beispielhaften Spannungszustandes eines Haltelements durch Sensoreinheiten zeigt; und
Fig. 14A einen ersten vorhergesagten Spannungszustand eines Haltelements in einer Draufsicht von außen und in einer Draufsicht von innen zeigt; und
Fig. 14B einen zweiten vorhergesagten Spannungszustand eines Haltelements in einer perspektivischen Ansicht zeigt; und
Fig. 14C einen dritten vorhergesagten Spannungszustand eines Haltelements in einer perspektivischen Ansicht zeigt; und
Fig. 15 schematisch eine Vorrichtung zur Durchführung des offenbarungsgemäßen Verfahrens zeigt.

### BESCHREIBUNG VON AUSFÜHRUNGSFORMEN

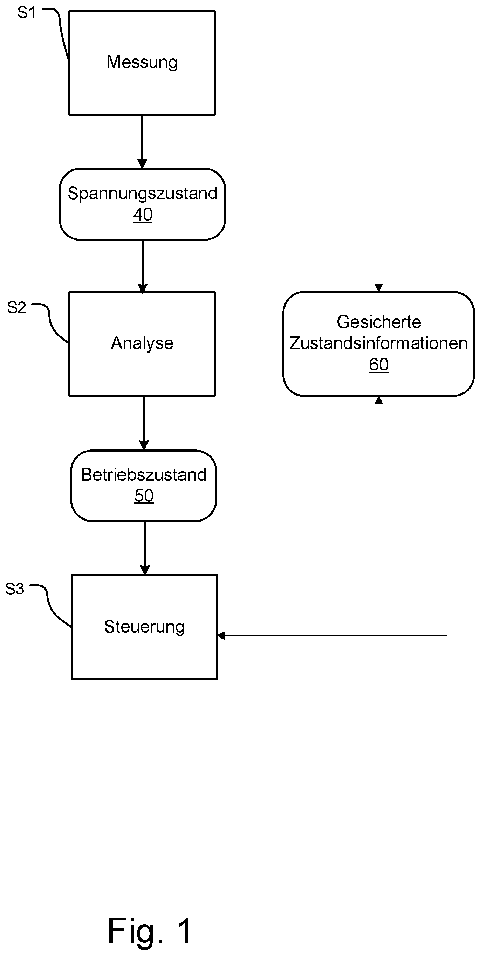

In Fig. 1 ist eine Ausführungsform des offenbarungsgemäßen Verfahrens in Übereinstimmung mit der vorliegenden Erfindung veranschaulicht. Vor einer detaillierten Beschreibung folgen zunächst allgemeine Erläuterungen zu den Ausführungsformen.

Entsprechend eines Aspekts wird ein Verfahren zum Betrieb einer Greifvorrichtung, aufweisend eine Greifanordnung mit Haltelementen, welche eine teilweise elastisch verformbare Struktur aufweisen, zum Halten eines umzuschlagenden Gutes, bereitgestellt, umfassend eine Messung eines Spannungszustandes wenigstens eines der Haltelemente mittels Spannungsmessvorrichtungen, eine Ermittlung eines momentanen Betriebszustandes der Greifvorrichtung auf Basis des Spannungszustandes des Haltelements und eine Steuerung der Greifvorrichtung auf Basis des ermittelten Betriebszustandes.

Eine Greifvorrichtung ist eine Vorrichtung zum Ergreifen und Heben bzw. Umsetzen eines umzuschlagenden Guts, wobei das Ergreifen das form-, kraft- und/oder reibschlüssig in Kontakt bringen von Teilen der Greifvorrichtung mit dem zu ergreifenden Gut beinhaltet, sodass auf das zu ergreifende Gut eine Haltekraft ausgeübt werden kann, welche es erlaubt, das ergriffene Gut von seiner Position im Raum fortzubewegen. Dabei wird das ergriffene Gut derart fortbewegt, dass es während der Fortbewegung nur mit der Greifvorrichtung/Greifanordnung in Kontakt ist. Haltelemente sind diejenigen Teile der Greifvorrichtung, welche mit dem zu ergreifenden Gut in Kontakt gebracht werden und können die Form von Rohren, Fingern oder insbesondere Platten haben.

Eine Greifanordnung ist derjenige Teil der Greifvorrichtung, welcher zum Ergreifen eines Guts vorgesehen ist. Dabei kann die Greifvorrichtung so vorgesehen sein, dass die Greifanordnung mittels entsprechender Mechanik im Wirkungsbereich der Greifvorrichtung beweglich ist. Die Greifanordnung kann eine Mehrzahl von Haltelementen umfassen. Die Haltelemente sind zumindest teilweise elastisch verformbar ausgelegt, wobei unter "elastisch verformbar" zu verstehen ist, dass das Haltelement bei Krafteinwirkung signifikant elastisch verformbar ist. Eine signifikante elastische Verformbarkeit liegt offenbarungsgemäß dann vor, wenn das Haltelement durch Krafteinwirkung eine signifikante Änderung seiner Geometrie erfährt.

Eine signifikante Änderung der Geometrie liegt beispielsweise dann vor, wenn sich ein Winkel eines aus einem Stück gefertigten Bauteils während höchster bestimmungsgemäßer Belastung des bestimmungsgemäßen Gebrauchs des Bauteils im Vergleich desselben Winkels in einem belastungsfreien Zustand um mehr als ein Zehntel eines Grads elastisch ändert. Die elastische Verformbarkeit des Haltelements kann durch eine zweckmäßige Formgebung oder durch eine zweckmäßige Materialauswahl gegeben sein. Nicht als zweckmäßig sind Materialien anzusehen, welche in Bereichen höchster bestimmungsgemäßer Belastung des bestimmungsgemäßen Gebrauch plastisch verformt oder nicht verformt werden.

Höchste bestimmungsgemäße Belastung liegt beispielsweise dann vor, wenn die auf das ergriffene Gut aufgebrachte Haltekraft dem Maximum dessen entspricht, was konstruktionsgemäß dem Maximum des bestimmungsgemäßen Betriebs entspricht. Insbesondere kann das Haltelement aus plattenförmigem Faserverbundkunststoff (FVK) geformt sein, jedoch sind auch andere elastisch verformbare Materialien, beispielsweise Federstahl, Vollkunststoffe oder elastische Holzsorten vorsehbar. Das ergriffene Gut ist dazu bestimmt, durch die Greifvorrichtung umgesetzt, also von einem Ort im Einflussbereich der Greifvorrichtung zu einem anderen Ort im Einflussbereich der Greifvorrichtung versetzt zu werden. Das zu ergreifende oder ergriffene Gut ist daher ein umzuschlagendes Gut.

Das umzuschlagende Gut kann ein Gegenstand sein oder eine Mehrzahl von Gegenständen. Das umzuschlagende Gut kann ein Konglomerat sein oder ein elastisch oder plastisch verformbarer Stoff. Das umzuschlagende Gut kann eine Flüssigkeit sein, welche in einem oder mehreren Behältern gelagert ist. Insbesondere kann das umzuschlagende Gut eine Lage von Gegenständen sein, welche durch das Aufbringen einer Haltekraft in eine form- oder reibschlüssige Verbindung gebracht werden. Der Spannungszustand ist der Zustand der in dem Haltelement herrschenden mechanischen Spannungen unter Einbringung einer Kraft. Die Kraft kann die Haltekraft sein oder aus einer anderen Quelle, wie beispielsweise der Berührung des Haltelements mit einer Umgebung herrühren. Die Messung des Spannungszustandes kann durch herkömmliche Messmethoden geschehen. Der Spannungszustand kann eine Mehrzahl von quantitativen Messwerten einer Kraft, einer Dehnung oder einer Spannung an definierten Positionen eines Haltelements umfassen.

Die Messmethoden können entweder die Spannung direkt messen oder eine Messgröße, welche die Herleitung bzw. die Berechnung der Spannung erlaubt. Beispielsweise kann die Messung mittels eines Dynamometers, eines Verformungssensors oder eines Dehnungsmessstreifens geschehen.

Ein Betriebszustand kann beispielsweise der Zustand des bestimmungsgemäßen Umsetzens eines umzuschlagenden Guts sein, der Zustand der Bewegung der Greifvorrichtung ohne Last, der Zustand der Berührung der Greifvorrichtung und/oder des Haltelements mit der Umgebung oder mit dem umzuschlagenden Gut, oder ähnliche Informationen sein, welche bei der Steuerung der Greifvorrichtung von Bedeutung sein können. Eine Steuerung kann beispielsweise ein Versetzen oder Bewegen in einer bestimmten Richtung oder zu einem bestimmten Ziel hin oder von einem bestimmten Ort weg der Greifanordnung im Wirkungsbereich der Greifvorrichtung umfassen. Eine Steuerung kann auch ein Erhöhen oder Verringern der Haltekraft umfassen. Eine Steuerung kann auch das Erzeugen eines Signals oder einer Mitteilung umfassen, welches zur Information eines Benutzers oder Bedieners der Greifvorrichtung dient. Der momentane Betriebszustand ist der Betriebszustand im Moment der Messung.

Eine Steuerung der Greifvorrichtung auf Basis des Betriebszustandes der Greifvorrichtung kann zu einer Optimierung des Betriebsablaufs der Greifvorrichtung oder der Anlage, in welcher die Greifvorrichtung zum Einsatz kommt, führen. Außerdem kann eine Steuerung eine Kollisions- oder Schadensvermeidung für die Anlage, die Greifvorrichtung oder das umzuschlagende Gut beinhalten.

Entsprechend eines Ausführungsbeispiels weist das Haltelement einen plattenförmig ausgebildeten Laschenkörper und eine Sensoreinheit auf, welche Spannungsmessvorrichtungen umfasst. Der plattenförmige Laschenkörper stellt die hauptsächliche strukturelle Komponente des Haltelements dar. Das Haltelement ist folglich derart ausgebildet, dass eine Oberfläche des Haltelements flächig einer Oberfläche des umzuschlagenden Guts in Kontakt gebracht werden kann.

Durch eine derartige Ausgestaltung kann insbesondere umzuschlagendes Gut mit planen Oberflächen oder einer prismenförmigen Grundgeometrie umgesetzt werden. Die Einbeziehung der Spannungsmessvorrichtungen in das Haltelement vereinfacht die Messung des Spannungszustandes des Haltelements.

Entsprechend eines Ausführungsbeispiels ist das Haltelement mit einem an einer Flachseite des Laschenkörpers ausgebildeten Befestigungsbereich an dem der Laschenkörper an einer Trägervorrichtung fixierbar ist und mit einem an der Flachseite ausgebildeten Haltebereich, über den eine Haltekraft auf das umzuschlagende Gut aufbringbar ist, versehen, wobei der Laschenkörper aus einem FVK-Werkstoff ausgebildet ist, und zwischen dem Befestigungsbereich und dem Haltebereich ein Biegebereich ausgebildet ist, in dem der Laschenkörper bei auf das umzuschlagende Gut aufgebrachter Haltekraft elastisch verformbar ist, und wobei der Biegebereich gegenüber dem Befestigungsbereich und/oder dem Haltebereich eine reduzierte Biegefestigkeit aufweist, und die Spannungsmessvorrichtungen Dehnungsmesstreifen umfassen.

Die Verwendung von Dehnungsmesstreifen, welche eine herkömmliche, jedoch vielseitig einsetzbare Methode zur Messung von Bauteildehnungen darstellen, vereinfacht die Herstellung der Haltelemente für welche das offenbarungsgemäße Verfahren bestimmt ist. Dehnungsmesstreifen (DMS) messen eine an einer Oberfläche des Haltelements auftretende Dehnung. Unter Benutzung der Hookeschen Konstante k kann dann mittels der Formel *F*ₛ *= x* · k, wobei 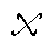 die Dehnung ist, die Oberflächenkraft *Fₛ* berechnet werden. Alternativ kann unter Benutzung der Verformung σ und des Elastizitätsmoduls E die Spannung ε mittels σ = *E* · ε berechnet werden. Somit kann der Spannungszustand des Bauteils berechnet werden. Es kann insbesondere die Verwendung von Folien-, Draht- und Halbleiter-DMS sowie als Mehrfach-DMS vorgesehen sein. Diese können in Formen wie DMS mit Querdehnung, Vollbrücken-DMS und Rosetten-DMS eingesetzt werden.

Entsprechend eines Ausführungsbeispiels ist die Sensoreinheit so an dem Haltelement vorgesehen, dass mittels DMS eine Spannung in einem Bereich des Haltelements gemessen werden kann, welcher elastisch verformbar ist.

Die DMS können auf dem Haltelement verklebt, einlaminiert oder mit einem anderen zweckmäßigen Verfahren verbunden werden. Insbesondere können die DMS in Bereichen besonders starker elastischer Verformung, beispielsweise in dem Biegebereich, vorgesehen sein.

Die Sensoreinheiten, insbesondere die DMS, können an dem Laschenkörper in einem zweidimensionalen Muster angeordnet sein. Beispielsweise können die Sensoreinheiten an den Schnittpunkten der Geraden eines schachbrettartigen Musters angeordnet sein. Die Sensoreinheiten können auch in einer oder mehreren Reihen und Spalten angeordnet sein. Die Sensoreinheiten können auch in einem asymmetrischen Muster angeordnet sein.

Entsprechend eines Ausführungsbeispiels ist die Greifanordnung insbesondere eine Baustoffgreifanordnung zum Umschlag einer Baustoffelementlage, und das umzuschlagende Gut die Baustoffelementlage.

Die offenbarungsgemäße Greifanordnung ist nicht beschränkt auf die Verwendung im Bereich des Umschlags von Baustoffelementen, jedoch sind Haltelemente mit teilweise elastisch verformbarer Struktur für diesen Bereich einsetzbar. Eine Baustoffelementlage ist beispielsweise eine quaderförmig oder anderweitig aufgeschichtete Mehrzahl von Ziegeln, Dachziegeln, Säcken mit Schüttgut wie Sand, Beton, Kies oder anderen Konglomeraten. Eine Baustoffelementlage kann auch eine Linienförmige Anordnung von Gegenständen sein. Eine Baustoffelementlage kann auch eine Mehrzahl an Metallbauteilen sein.

Entsprechend eines Ausführungsbeispiels umfasst der momentane Betriebszustand einen quantitativen Wert der momentan durch das Haltelement auf das umzuschlagende Gut aufgebrachten Haltekraft.

Die Haltekraft kann aus dem Spannungszustand abgeleitet werden. Durch eine Bestimmung der momentan aufgebrachten Haltekraft kann eine Überbeanspruchung der Struktur des umzuschlagenden Guts vermieden werden.

Die durch mehrere Haltelemente aufgebrachten Haltekräfte kompensieren in Summe, ggf. unter Nutzung der Haftreibung zwischen den Laschenkörpern und dem zu haltenden Gegenstand, die Gravitationskraft so, dass der Gegenstand nach Wahl in Ruhe, oder in Auf- und Abwärtsbewegung ist, bzw. erlauben es, den zu haltenden Gegenstand lateral in Bewegung zu versetzen oder aus der Bewegung in einen Ruhezustand zu versetzen.

Entsprechend eines Ausführungsbeispiels umfasst der momentane Betriebszustand eine Berührung des Haltelements oder der Greifanordnung mit einer Umgebung der Greifanordnung.

Die Umgebung der Greifanordnung sind dabei Objekte oder Lebewesen, die nicht Teil der Greifanordnung oder des umzuschlagenden Gutes sind. Die Umgebung kann Teile der Anlage umfassen, in welcher die Greifvorrichtung eingesetzt wird. Die Berührung wird dabei durch eine Auswertung oder Analyse des Spannungszustands festgestellt. Hierfür können eine Mehrzahl von Sensoreinheiten an jedem in der Greifvorrichtung enthaltenen Haltelement vorgesehen sein. Die Ermittlung einer Berührung kann als eine taktile Messung bezeichnet werden.

Entsprechend eines Ausführungsbeispiels umfasst der momentane Betriebszustand eine Position des Haltelements oder der Greifanordnung relativ zu der Umgebung der Greifanordnung.

Hierfür können Informationen hinzugezogen werden, welche die relative Position der Greifanordnung zur Geometrie der Greifvorrichtung angeben. Diese Informationen können auf den Messungen der Sensoreinheiten basieren oder aus externen Quellen stammen.

Entsprechend eines Ausführungsbeispiels umfasst der momentane Betriebszustand einen Anlagenzustand einer Anlage, in welcher die Greifvorrichtung eingesetzt ist.

Die Greifvorrichtung kann beispielsweise in einer Produktionsanlage zum Einsatz kommen. Der Anlagenzustand kann einen Zustand der Produktionsanlage beschreiben, in welcher das Umsetzen von umzuschlagenden Gütern verlangt wird. Die Greifvorrichtung kann auch in anderen Anlagen zum Einsatz kommen. Der Anlagenzustand kann andere Zustände der Anlage beschreiben. Durch die Einbeziehung des Anlagenzustands in die Steuerung kann die Anwendbarkeit des Verfahrens für spezifische Anlagen verbessert werden.

Entsprechend eines Ausführungsbeispiels umfasst der momentane Betriebszustand einen Zustand des umzuschlagenden Gutes.

Der Zustand des umzuschlagenden Gutes kann eine strukturelle Stabilität des umzuschlagenden Gutes sein. Der Zustand des umzuschlagenden Gutes kann auch eine elastische oder plastische Verformung des umzuschlagenden Gutes sein. Durch die Einbeziehung des Zustands des umzuschlagenden Gutes in die Steuerung kann eine Beschädigung des umzuschlagenden Gutes beispielsweise durch die Haltekraft der Greifvorrichtung minimiert werden. Insbesondere kann durch Vergleich verschiedener Zustände des umzuschlagenden Gutes eine Änderung des Zustands des umzuschlagenden Guts festgestellt werden. Wenn eine solche Änderung in unerwünschter Weise eintritt, so kann die Steuerung auf diese Änderung reagieren.

Der Zustand des umzuschlagenden Guts kann auch ein Gewicht des umzuschlagenden Guts sein. Hierfür kann aus der Verformung von Teilen des Laschenkörpers, welche mit einem Knick versehen sind, eine in Richtung der Erdschwerkraft wirkende Kraft errechnet werden, welche eine Gewichtskraft ist. Der Laschenkörper kann somit als Waage funktionieren.

Entsprechend eines Ausführungsbeispiels umfasst der Zustand des umzuschlagenden Gutes eine relative Anordnung zueinander oder ein Fehlen von Teilen des umzuschlagenden Gutes.

Wenn das umzuschlagende Gut aus einem Kollektiv von Objekten besteht, welche beispielsweise Reibschlüssig miteinander verbunden sind, so kann bei unzureichender Haltekraft eines der Objekte aus dem Kollektiv herausfallen oder herausrutschen, was zu Beschädigungen des umzuschlagenden Gutes oder der Umgebung führen kann. Die Steuerung kann derart ausgelegt sein, dass Beschädigungen minimiert werden.

Entsprechend eines Ausführungsbeispiels umfasst der Zustand des umzuschlagenden Gutes eine Größe des umzuschlagenden Gutes oder eine Größe von Teilen des umzuschlagenden Gutes.

Der Spannungszustand des Haltelements lässt Rückschlüsse auf die Größe des umzuschlagenden Gutes zu. Insbesondere kann, wenn das umzuschlagende Gut aus einem Kollektiv von Gegenständen besteht, welche als identisch erwünscht sind, festgestellt werden, ob das Kollektiv Gegenstände enthält, welche in Größe oder Form unerwünscht sind. Die Form oder eine Größe des umzuschlagenden Guts kann beispielsweise mittels des Vergleiches des Spannungszustandes in einem Greifvorgang mit einer Kalibration erkannt werden. Beispielsweise kann in einem Testgreifvorgang ein Objekt einer bestimmten Größe gegriffen werden. Dann wird der Spannungszustand gespeichert. Ein Vergleich des gespeicherten Spannungszustandes mit einem Spannungszustand, welcher in einem Greifvorgang eines zweiten Objekts gegriffen wird, lässt dann eine Ermittlung der relativen Größen der Objekte zu. Beispielsweise kann in einem Testgreifvorgang ein Objekt einer bestimmten Form und Größe gegriffen werden. Dann wird der Spannungszustand gespeichert. Ein Vergleich des gespeicherten Spannungszustandes mit einem Spannungszustand, welcher in einem Greifvorgang eines zweiten Objekts gegriffen wird, lässt dann eine Ermittlung der relativen Formen und Größen der Objekte zu.

Eine Form des Objekts kann beispielsweise eine Rundform, eine Eckform, eine Quaderform, eine Würfelform oder eine unregelmäßige Prismenform umfassen.

Eine Erkennung von Formen nach dem offenbarungsgemäßen Verfahren kann auch das Erkennen von dafür vorgesehen Markierungen umfassen. Dafür vorgesehene Markierungen können haptisch erfassbare Vorsprünge sein, welche zu diesem Zweck auf dem umzuschlagenden Gut angebracht und vorgesehen sein. Diese Vorsprünge können in eindeutig erfassbaren Formen oder in eindeutigen Mustern zueinander vorgesehen sein. Beispielsweise kann eine Markierung aus zwei oder mehr, beispielsweise reihenartig zueinander angeordnet, zylinderförmigen Vorsprüngen bestehen, die auf einer Seite des umzuschlagenden Guts vorgesehen sind, welche mit den Haltelementen und/oder Laschenkörpern in Kontakt sind. Die Anordnungen der Markierungen können dabei Informationen über das umzuschlagende Gut kodieren, welche dem Verfahren anderweitig unzugänglich sind. Beispielsweise kann eine bestimmte Anordnung der Markierungen Information über das Herstellungsdatum des umzuschlagenden Guts kodieren. Die Markierungen werden beispielsweise von einem Benutzer ausgewählt, welcher die enthaltene Information im Betrieb der Greifvorrichtung nutzen möchte. Die Markierungen können beispielsweise aus demselben Material wie das umzuschlagende Gut bestehen und mit diesem fest verbunden oder zusammenhängend geformt sein oder aus einem anderen Material und, beispielsweise mittels Kleben dauerhaft oder temporär mit dem umzuschlagenden Gut verbunden sein.

Die Kalibration kann beispielweise einen Schwellwert für die gemessenen Dehnungen umfassen, wobei eine Klassifizierung eines Objekts als ein Objekt einer bestimmten Größe und/oder Form in Abhängigkeit vom Überschreiten des Schwellwerts bestimmt wird. Es können auch Schwellwerte für individuelle Greifvorgänge vorgesehen werden. Beispielsweise kann ein erster Schwellwert oder ein erster Satz von Schwellwerten für das Ergreifen eines ersten Gutes und ein davon verschiedener zweiter Schwellwert oder ein zweiter Satz von Schwellwerten für das Ergreifen eines zweiten Gutes vorgesehen sein.

Die Kalibration kann die Durchführung einer Vielzahl von Testvorgängen vorsehen, im Zuge derer die Schwellwerte angepasst werden. Die Testvorgänge können das Ergreifen eines bestimmten umzuschlagenden Guts und Speichern der so ermittelten Spannungszustände vorsehen. Die durch Testvorgänge ermittelten Spannungszustände können als vorermittelte Spannungszustände bezeichnet werden. Die Schwellwerte können auch ohne Durchführung von Testvorgängen ermittelt werden, beispielsweise unter Anwendung mathematischer Modellierungen oder der Finite-Element Methode (FEM). Die Ergebnisse einer Modellierung mittels FEM können als vorhergesagte Spannungszustände bezeichnet werden. Die vorhergesagten Spannungszustände bezeichnen damit Spannungszustände eines Haltelements, welche unter Annahme einer vorher festgelegten Belastung oder bei Ergreifen oder Umsetzen eines umzuschlagenden Gutes mit bestimmten Eigenschaften erwartet werden. Die bestimmten Eigenschaften können eine Größe, Form, Masse, Konsistenz, Feuchtigkeit, Vorhandensein von haptisch erfassbaren Markierungen etc. sein. Die bestimmten Eigenschaften führen beispielsweise zu einer Ermittlung des entsprechenden Zustands des umzuschlagenden Gutes. Das Ermitteln eines Betriebszustandes oder das Ermitteln eines Zustands des umzuschlagenden Gutes kann ein Vergleichen des während des normalen Betriebs gemessenen Spannungszustandes mit einem oder mehreren vorhergesagten Spannungszuständen oder vorermittelten Spannungszuständen vorsehen. Eine Kalibration kann auf vorhergesagten Spannungszuständen oder vorermittelten Spannungszuständen basieren.

Anstelle der Anwendung einer schwellwert-basierten Kalibration kann auch ein neuronales Netzwerk oder Maschinenlernen genutzt werden. Dafür kann eine Erzeugung von Trainingsdaten durch die Durchführung einer Vielzahl von Testvorgängen vorgesehen werden, im Zuge derer die Spannungszustände gespeichert werden. Darüber hinaus können die Trainingsdaten mit Labels versehen sein, welche beispielsweise Informationen über das umzuschlagende Gut enthalten. Diese Informationen können eine Masse, die Größe, Form oder eine Beschaffenheit des umzuschlagenden Guts umfassen.

Beispielsweise kann das offenbarungsgemäße Verfahren in einer Ziegelei angewendet werden, um die Beschaffenheit, welche eine Konsistenz, Härte oder eine Feuchtigkeit der Ziegel umfasst, nachfolgend einer Produktion der Ziegel in einem Extrusionsvorgang, zu messen. Da Ziegel nachfolgend des Extrusionsvorgangs umgesetzt werden müssen, kann durch Messung der Beschaffenheit während des Umsetzens auf eine gesonderte Messung der Beschaffenheit durch manuelle Methoden verzichtet werden. Dadurch kann eine Ziegelherstellung durch Einsparung von Personalkosten günstiger gestaltet werden. Außerdem kann eine Produktionsqualität verbessert werden.

Entsprechend eines Ausführungsbeispiels umfasst die Steuerung der Greifvorrichtung eine Optimierung eines Betriebszyklus der Greifvorrichtung oder eine Optimierung eines Betriebszyklus der Anlage, in welcher die Greifvorrichtung eingesetzt ist.

Eine Optimierung kann beispielsweise ein Ermitteln einer optimalen Betriebsgeschwindigkeit der Anlage umfassen, in welcher die Greifvorrichtung zum Einsatz kommt. Dazu wird zunächst die Betriebsgeschwindigkeit der Anlage auf einen vorher festgelegten Wert eingestellt und die Anlage in Betrieb gesetzt und mittels der Analyse des Spannungszustandes der in der Greifvorrichtung enthaltenen Haltelemente das Auftreten von Anomalien überwacht. Ferner kann durch die Ermittlung der Haltekraft festgestellt werden, ob eine Bewegung der Greifanordnung während eines Greif- oder Umsetzvorgangs schneller durchgeführt werden kann, oder ob eine Bewegung mit einer größeren oder kleineren Verzögerungs- bzw. Bremswirkung durchgeführt werden kann. Außerdem kann ermittelt werden, ob eine während des Betriebs aufgewendete Haltekraft für die jeweilige Aufgabe angepasst ist. Auch kann, sofern die Greifanordnung im Betrieb für voneinander verschiedene Aufgaben eingesetzt wird, eine für die jeweilige Aufgabe angepasste Haltekraft ausübt. Dabei können voneinander verschiedene Aufgaben beispielsweise das Umsetzen von voneinander verschiedenen umzuschlagenden Gütern umfassen.

Ferner kann das offenbarungsgemäße Verfahren zur Berechnung eines Zustands der Greifvorrichtung, der die Greifvorrichtung umfassenden Anlage oder Teilen der Greifvorrichtung oder der die Greifvorrichtung umfassenden Anlage angewendet werden. Beispielsweise kann durch eine Kraftmessdose eine durch den Aktuator ausgeübte Kraft gemessen werden, welche dann mit den durch die Sensoreinheiten ermittelten Spannungszuständen korreliert wird. Plötzliche Änderungen der Korrelation können als Indikation des Versagens einer Komponente gewertet werden. Auf Basis einer solchen Korrelation können ferner herkömmliche statistische Verfahren zur Versagensvorhersage bzw. prädiktiven Wartung angewendet werden.

Anomalien können beispielsweise eine Berührung mit der Umgebung oder eine Änderung des Zustands des umzuschlagenden Guts, oder ein Versagen eines Bauteils, beispielsweise des Haltelements oder des Laschenkörpers, sein und mittels der Analyse des Spannungszustands erkannt werden.

Entsprechend eines Ausführungsbeispiels umfasst die Steuerung der Greifvorrichtung eine Vermeidung oder Neutralisierung von Kollisionen des Haltelements oder der Greifanordnung mit der Umgebung der Greifanordnung.

Vermeidung einer Kollision kann die Steuerung der Greifvorrichtung derart beinhalten, dass Kollisionen oder Berührungen mit der Umgebung verhindert werden. Neutralisierung einer Kollision kann die Steuerung der Greifvorrichtung derart beinhalten, dass auf das Objekt, mit welchem die Greifvorrichtung kollidiert, ein geringer Impuls übertragen wird. Die kann beispielsweise dadurch geschehen, dass die Bewegung der Greifanordnung, wenn eine Berührung der Greifanordnung mit der Umgebung erkannt wird, in einem kurzen Zeitintervall ausgesetzt wird. Durch eine derartige Steuerung können Schäden im Betrieb der Greifvorrichtung minimiert werden.

Entsprechend eines zweiten Aspekts wird eine Greifvorrichtung zum Halten eines umzuschlagenden Gutes bereitgestellt, welche eine Greifanordnung mit wenigstens einem Haltelement umfasst, an welchem eine Sensoreinheit ausgebildet ist, wobei die Sensoreinheit Dehnungsmesstreifen umfasst, und eine Steuerungseinheit, welche zur Durchführung eines Verfahrens umfassend eine Messung eines Spannungszustandes wenigstens eines der Haltelemente mittels Spannungsmessvorrichtungen, eine Ermittlung eines momentanen Betriebszustandes der Greifvorrichtung auf Basis des Spannungszustandes des Haltelements und eine Steuerung der Greifvorrichtung auf Basis des ermittelten Betriebszustandes ausgebildet ist.

Entsprechend einer Ausführungsform ist die Sensoreinheit so an dem Haltelement vorgesehen, dass mittels der Dehnungsmessstreifen eine Spannung in einem Bereich des Haltelements gemessen werden kann, welcher elastisch verformbar ist. Die Messung der Dehnung in Bereichen, welche elastisch verformbar sind, erlaubt eine besonders genaue Messung des Spannungszustands.

Entsprechend eines drittens Aspekts wird eine Verwendung der offenbarungsgemäßen Greifvorrichtung zur Umsetzung des offenbarungsgemäßen Verfahrens bereitgestellt.

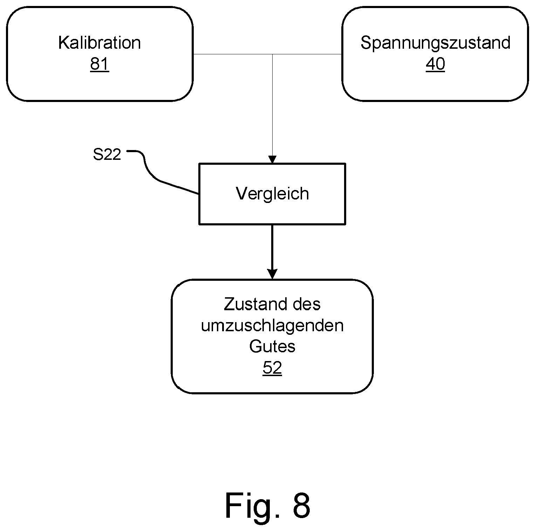

Zurückkommend zu Fig. 1, veranschaulicht diese eine erste Ausführungsform des offenbarungsgemäßen Verfahrens beinhaltend einen Messschritt S1, welcher Informationen über einen Spannungszustand 40, welcher durch Spannungszustandsinformationen beschrieben wird, erzeugt, einen Analyseschritt S2, welcher auf Basis des Spannungszustands 40 einen Betriebszustand 50, welcher durch Betriebszustandsinformationen beschrieben wird, ermittelt und einen Steuerungsschritt S3, in welchem auf Basis des Betriebszustands 50 eine Ansteuerung der Greifanordnung vorgenommen wird. Der Analyseschritt S2 kann dabei ein Verfahren entsprechend dem untenstehend in Fig. 8 gezeigten Verfahren umfassen.

Die Zustandsinformationen, welche die Zustände 40, 50 beschreiben, sind beispielsweise als elektronische Datensätze vorzusehen, insbesondere als ein- oder mehrdimensionale Variablen eines Rechnerprogramms. Dabei können gängige Dateiformate zum Einsatz kommen, jedoch sind Implementierungen als reine, unformatierte Textdateien denkbar.

Es gibt Ausführungsformen, in denen eine Speicherung bzw. eine Sicherung der Datensätze der Zustandsinformationen, welche die Zustände 40, 50 beschreiben, vorzusehen ist, wobei die Zustandsinformationen mit Zeitinformationen assoziiert werden, welche den Zeitpunkt der Messung im Vergleich beispielsweise mit einer Systemuhr der Steuerungseinheit angeben. Die so gesicherten Zustandsinformationen 60 stehen für weitere Verwendung zur Verfügung. Die Sicherung der Zustandsinformationen geschieht, indem die Zustandsinformationen in herkömmlicherweise einer Datenstruktur hinzugefügt werden. Die Datenstruktur kann eine Datei, eine Datenbank oder Ähnliches sein, welche auf einem dafür geeigneten Speichermedium abgelegt wird.

Optional kann auch ein Einfließen und eine Nutzung der gesicherten Zustandsinformationen 60 in den Steuerungsschritt S3 vorgesehen sein.

Die hier gezeigten Verfahrensschritte können insbesondere durch eine Steuerungseinheit vorgenommen werden. Ausführungsformen der offenbarungsgemäßen Steuerungseinheit werden im weiteren Verlauf der Offenbarungsschrift näher beschrieben. Die gezeigten Verfahrensschritte werden in einem kurzen Zeitfenster während des Betriebs der Greifanordnung oder einer Anlage, in welcher die Greifanordnung zum Einsatz kommt, durchgeführt. Das kurze Zeitfenster kann beispielsweise ein Betriebszyklus der Greifanordnung oder der Steuerungseinheit sein. Somit spiegeln die ermittelten Zustände, also der Spannungszustand 40 und der Betriebszustand 50, beispielsweise einen momentanen Zustand wider, welcher zum Zeitpunkt der Messung geherrscht hat. Es ist zu beachten, dass die dargestellten Verfahrensschritte in jedem aufeinanderfolgenden Betriebszyklus wiederholt durchgeführt werden können.

Eine oben beschriebene Sicherung der Zustandsinformationen, welche die Zustände 40, 50 beschreiben, erlaubt eine Nutzung der Zustände im Steuerungsschritt S3 in Betriebszyklen, welche dem Betriebszyklus, in welchem sie im Messschritt S1 gemessen wurden, nachfolgen. Eine Sicherung der Zustandsinformationen stellt diese außerdem für diagnostische Zwecke außerhalb des Betriebs der Greifanordnung zur Verfügung.

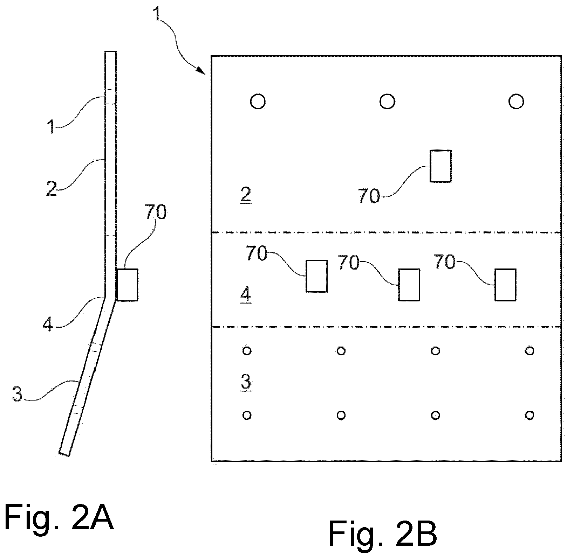

Fig. 2A und 2B zeigen ein Haltelement 1, welches in einer Greifanordnung, in welcher eine Ausführungsform das offenbarungsgemäße Verfahren zur Anwendung kommen kann, eingesetzt sein kann.

Fig. 2A zeigt eine Seitenansicht und Fig. 2B eine Ansicht von vorne. Das Haltelement umfasst, wie dargestellt, einen plattenförmigen Laschenkörper. Das Haltelement 1 umfasst außerdem Sensoreinheiten 70. Es ist zu verstehen, dass die hier dargestellte Form des Haltelements 1 ein nicht einschränkendes Beispiel ist. Das offenbarungsgemäße Verfahren kann auf der Verwendung anders ausgeführter Haltelemente 1 beruhen.

Das Haltelement 1 kann eine Sensoreinheit 70 umfassen, jedoch sind auch Ausführungsformen denkbar, in denen mehr als eine Sensoreinheit 70 ausgebildet ist. Auch können, sofern mehr als eine Sensoreinheit 70 vorgesehen ist, verschiedene Formen von Sensoreinheiten 70, beispielsweise eine Sensoreinheit mit Spannungsmessvorrichtung 71, und eine Sensoreinheit ohne Spannungsmessvorrichtung 72 vorgesehen sein. Erfindungsgemäß ist jedoch zumindest eine Sensoreinheit als Sensoreinheit mit Spannungsmessvorrichtung 71 vorzusehen.

Das Haltelement kann einen Befestigungsbereich 2, einen Haltebereich 3 sowie einen dazwischen verlaufenden Biegebereich 4 umfassen. Die Wirkflächen im Befestigungs- und Haltebereich 2,3 können jeweils entlang einer Flachseite des platten- bzw. scheibenförmigen Haltelements 1 verlaufen.

Die wirksamen Halte-, Befestigungs- und Biegekräfte wirken etwa senkrecht zu diesen Wirkflächen.

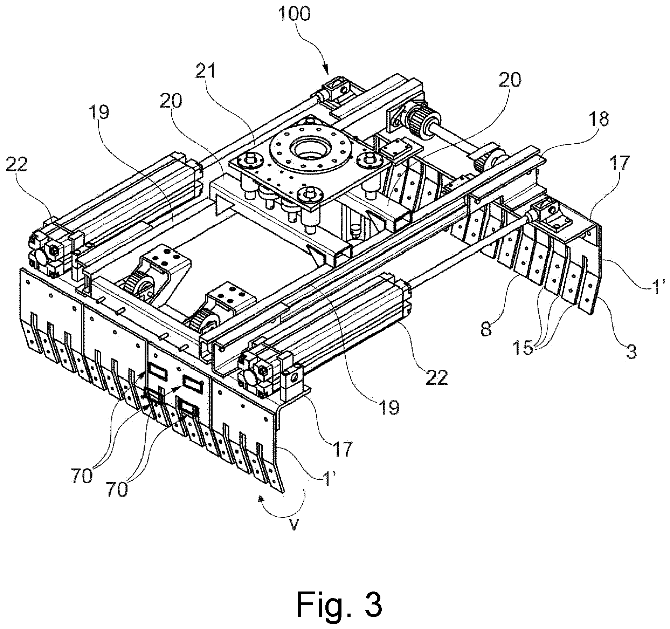

Fig. 3 zeigt eine Greifvorrichtung 100, in welcher eine Ausführungsform des offenbarungsgemäßen Verfahrens angewendet werden kann, mit mehreren Haltelementen 1', die ähnlich dem Haltelement 1 ausgebildet sein können, aber im Gegensatz zu diesem drei Einschnitte 15 aufweisen können, so dass jedes Haltelement 1' mit vier Haltefingern 16 versehen ist. Die Haltelemente 1' können jeweils an einer Winkelschiene 17 befestigt sein, die jeweils über zwei Rollenschuhe 18 in einer Führungsschiene 19 zueinander verschiebbar aufgenommen sein können, so dass die aus den Winkelschienen 17 und den Haltelementen 1' gebildeten Haltelementanordnungen aufeinander zu und voneinander weg in den Führungsschienen 19 geführt sind. Es ist zu verstehen, dass die hier dargestellte Form des Haltelements 1 ein nicht einschränkendes Beispiel ist. Das offenbarungsgemäße Verfahren kann auf der Verwendung anders ausgeführter Haltelemente 1 beruhen.

Die Führungsschienen 19 können über zwei Quertraversen 20 miteinander verbunden sein und elastisch gedämpft mit einer Anschlussplatte 21 gekoppelt, über die die gesamte Greifvorrichtung 100 beispielsweise mit einem Roboterarm (nicht dargestellt) oder einer anderen Umschlageinrichtung koppelbar ist. Die Verstellung der Winkelschienen 17 mit den Haltelementen 1' erfolgt durch zwei Stellzylinderanordnungen 22, über die die Haltelemente 1' zwischen ihrer Halte- und ihrer Freigabestellung verstellbar sind.

In der Haltestellung kann die Greifvorrichtung 100 mit den Haltelementen 1' eine nicht dargestellte Baustofflage übergreifen, so dass die Haltebereiche 3 der Haltelemente 1 in den Bereich der entsprechenden Seitenflächen (Flanken) der Baustoffelemente geraten. Über die Stellzylinder 22 können dann die Winkelschienen aufeinander zu bewegt werden, so dass Haltekanten 8 der einzelnen Haltefinger 16 an den Baustoffelementen anliegen und dort eine Haltekraft aufbauen können, die so groß ist, dass beim Anheben der Greifvorrichtung 100 alle Baustoffelemente zwischen den Haltelementen 1' fixiert sind.

Die Baustoffelemente sind dabei insbesondere form- und/oder reibschlüssig gekoppelt zwischen den Haltelementen 1' fixiert. Dabei können sich die Haltefinger 16 elastisch in Richtung v verbiegen, indem sie sich im Biegebereich 4 elastisch verformen. Die im Biegebereich 4 auftretende Verformung führt zu einer Veränderung des Spannungszustandes 40, welcher durch Sensoreinheiten 70, welche, wie oben beschrieben, an den Haltelementen vorgesehen sind, gemessen wird. Mittels dem gemessenen Spannungszustand 40 kann so, als eine mögliche Steuerung, die Haltekraft allmählich und fein dosiert über die Stellzylinder 22 aufgebaut werden, bis ein flächiger Kontakt zwischen Baustoffelementen und den Haltelementen 1' besteht.

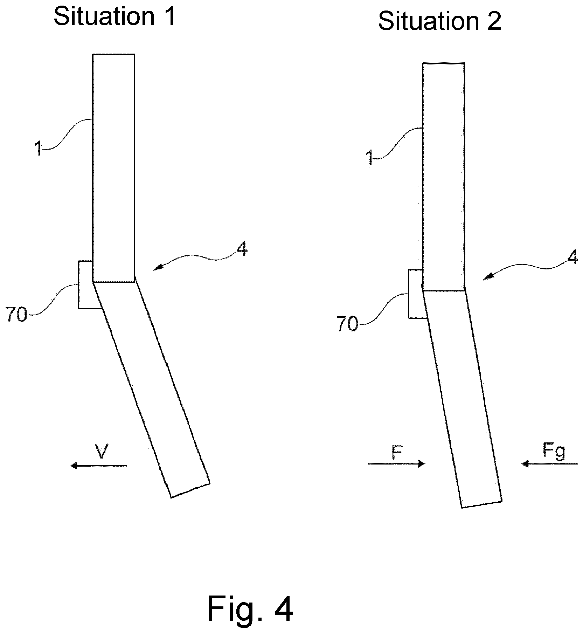

Fig. 4 illustriert schematisch die Messung S1 eines Spannungszustandes 40 an einem Beispiel. In einer Situation 1 kann ein Haltelement 1 in entspanntem Zustand vorliegen. Es ist zu verstehen, dass die hier dargestellte Form des Haltelements 1 ein nicht einschränkendes Beispiel ist. Das offenbarungsgemäße Verfahren kann auf der Verwendung anders ausgeführter Haltelemente 1 beruhen.

Eine Sensoreinheit 70, welche hier beispielsweise im Biegebereich 4 des Haltelements 1 vorgesehen ist, umfasst einen DMS als Spannungsmessvorrichtung und kann somit als eine Sensoreinheit 71 bezeichnet werden. Der DMS ist in entspanntem Zustand, sodass der DMS als Spannungsmessvorrichtung eine Ausdehnung x = 0 misst. Durch eine, unten beschriebene, Kalibration oder unter Verwendung der Materialparameter des zur Herstellung des Laschenkörpers des Haltelements 1 genutzten Werkstoffe, beispielsweise der Hookeschen Federkonstante 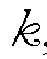 , kann mittels der Dehnung 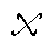 unter Verwendung der bekannten Formel *F*ₛ *= x* · *k* die Kraft *F*ₛ berechnet werden, welche zur Verformung des Haltelements 1 im Biegebereich 4 notwendig ist. Dabei ist *F*ₛ eine Kraft parallel zur Oberfläche des Haltelements 1 im Biegebereich 4. Alternativ kann unter Benutzung der Verformung *σ* und des Elastizitätsmoduls *E* die Spannung *ε* im Biegebereich mittels σ = *E* · ε berechnet werden In der entspannten Situation 1 ergibt die Messung aufgrund der Ausdehnung *x* = 0 eine Kraft *F*ₛ = 0.

In einer Situation 2, in welcher das Haltelement 1 entsprechend der Beschreibung von Fig. 3 einen Gegenstand ergreift, wird das Haltelement 1 in der Richtung V verformt, wodurch im Biegebereich 4 die Oberfläche des Haltelements 1 (in Beispielsfall) gestaucht wird. Die gemessene Ausdehnung ist dann beispielsweise *x* = -*C*, wobei C ein Parameter, welcher eine Länge beschreibt, ist. Der DMS wird also um eine Länge C verkürzt. Entsprechend der Formel *F*ₛ *= x* · *k* kann so wiederum die Kraft Fₛ berechnet werden, die dann beispielsweise *F*ₛ *= -K* beträgt, wobei K ein Parameter ist, welcher eine Kraft beschreibt. Mittels der Kraft *F*ₛ kann eine Haltekraft bestimmt werden, welche sich, beispielsweise unter Einbeziehung von bauteilabhängigen (hier das Haltelement 1 betreffend) Parametern wie dem Flächenträgheitsmoment oder Formfaktoren berechnen lässt. Zur Bestimmung der bauteilabhängigen Parameter kann es zweckmäßig sein, eine Kalibration durchzuführen, bei welcher die eingebrachte Haltekraft durch externe Mittel, beispielsweise durch einen Kraftmesser bzw. ein Dynamometer, bestimmt wird und dann mit der durch die von dem Haltelement 1 umfassten Sensoreinheiten 70 gemessenen Parameter, insbesondere Kraft, Spannung oder Dehnung, korreliert werden.

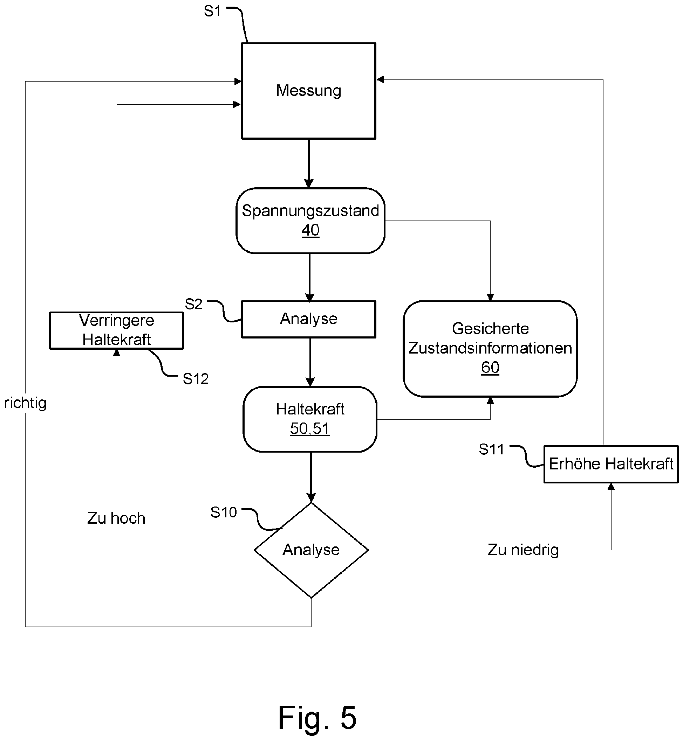

Fig. 5 veranschaulicht schematisch ein Ausführungsbeispiel für ein offenbarungsgemäßes Verfahren zur Ermittlung einer Haltekraft 51 als Betriebszustand 50 und Steuerung der Greifvorrichtung auf Basis des Betriebszustands 50. Zunächst wird hier in einem Messschritt S1, welcher derselbe Messschritt wie in Fig. 1 veranschaulicht sein kann, eine Messung S1 vorgenommen. Die Messung kann, in einem Ausführungsbeispiel, eine Messung einer Spannung oder eine Dehnung der Oberfläche des Biegebereichs 4 des Haltelements 1 umfassen. Durch den Messschritt S1 wird der Spannungszustand 40 des Haltelements ermittelt, auf Basis dessen dann, entsprechend dem Analyseschritt S2, bekannt aus Fig. 1, die Haltekraft 51 bestimmt wird. Die Haltekraft 51 kann als Teil des Betriebszustands 50 angesehen werden. Auf Basis der Haltekraft 51 kann dann der aus Fig. 1 bekannte Steuerungsschritt S3 ausgeführt werden, welcher hier einen Vergleichsschritt S10 und einen von zwei Regelungsschritten S11 und S12 umfassen kann. In dem Vergleichsschritt S10 wird die ermittelte Haltekraft 51 mit einem Zielwert verglichen. Der Analyseschritt S2 kann dabei ein Verfahren entsprechend dem untenstehend in Fig. 8 gezeigten Verfahren umfassen.

Der Vergleich des Zielwerts kann umfassen, das Vorliegen einer Übereinstimmung der Haltekraft 51 mit dem Zielwert zu erkennen, wenn die Haltekraft 51 maximal einen bestimmten Betrag, beispielsweise 5% des Zielwertes, vom Zielwert abweicht und das Nichtvorliegen einer Übereinstimmung zu erkennen, wenn die Haltekraft 51 mehr als den bestimmten Betrag vom Zielwert abweicht. So kann festgestellt werden, wenn die Haltekraft 51 mit dem Zielwert übereinstimmt, der Wert "richtig" ist. Wenn der Wert "richtig" ist, wird der Betriebszyklus ohne Änderung fortgesetzt. Es ist zu beachten, dass der bestimmte Betrag auch Null sein kann.

Wenn andererseits die Haltekraft 51 als höher als der Zielwert bestimmt wird, und gleichzeitig um mehr als den bestimmten Betrag von dem Zielwert abweicht, kann die Haltekraft als "zu hoch" klassifiziert werden. In diesem Fall kann, in einem Regelungsschritt S12, die Haltekraft verringert werden. Dies kann dadurch geschehen, dass, beispielsweise auf Basis der ermittelten Haltekraft 51, die durch einen dafür vorgesehenen Aktuator oder Motor auf das Haltelement 1 im Befestigungsbereich 2 ausgeübte Kraft verringert wird.

Wenn wiederum die Haltekraft 51 als niedriger als der Zielwert bestimmt wird, und gleichzeitig um mehr als den bestimmten Betrag von dem Zielwert abweicht, kann die Haltekraft als "zu niedrig" klassifiziert werden. In diesem Fall kann, in einem Regelungsschritt S12, die Haltekraft erhöht werden. Dies kann dadurch geschehen, dass, beispielsweise auf Basis der ermittelten Haltekraft 51, die durch einen dafür vorgesehenen Aktuator oder Motor auf das Haltelement 1 im Befestigungsbereich 2 ausgeübte Kraft erhöht wird.

Es sind Ausführungsformen denkbar, in welchen der Zielwert der Haltekraft aus dem ermittelten Spannungszustand 40 oder dem ermittelten Betriebszustand 50 errechnet oder anderweitig zugewiesen wird. Auch kann der Zielwert der Haltekraft auf Basis einer Art, eines Typs, eines Materials oder einer Konsistenz des umzuschlagenden Guts bestimmt werden. Beispielsweise kann hartes bzw. druckfestes Gut, wie beispielsweise Ziegelsteine, mit einer höheren Haltekraft ergriffen werden als weiches Gut, wie beispielsweise weiches Holz. Eine Ermittlung des Zielwerts der Haltekraft auf Basis der Art, des Typs, des Materials oder der Konsistenz des umzuschlagenden Guts kann dazu dienen, Beschädigungen des umzuschlagenden Guts zu vermeiden, wenn dieses eine geringe Härte und/oder Druckfestigkeit aufweist. Andererseits kann ein mit größerer Haltekraft ergriffenes Gut mit höherer Geschwindigkeit umgesetzt werden. Es ist also zweckmäßig, eine dem umzuschlagenden Gut angepasste Haltekraft aufzuwenden.

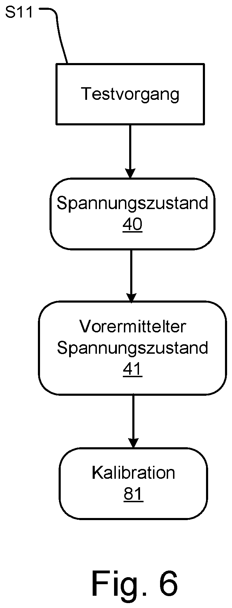

Fig. 6 zeigt ein Verfahren zur Ermittlung einer Kalibration 81, welche auf der Durchführung von Testvorgängen S11 beruht. Ein Testvorgang S11 kann eine Inbetriebnahme der Haltevorrichtung sein, bei welcher ein bestimmtes umzuschlagenden Gut mit, durch eine manuelle Inspektion durch den Benutzer, bekannten Zuständen des umzuschlagenden Gutes, beispielsweise bestimmten Eigenschaften wie eine bekannte Größe, Form, Konsistenz, haptischen Merkmalen, etc., ergriffen wird. Die während des Greifvorgangs als Testvorgang in Schritt S11 gemessenen Spannungszustände können, gemeinsam mit den bekannten Zuständen des umzuschlagenden Gutes, gespeichert werden. Gegebenenfalls kann eine Nachbearbeitung der gespeicherten Spannungszustände 40 vorgesehen sein.

Auf Basis der gespeicherten Spannungszustände 40 werden die vorermittelten Spannungszustände 41 erzeugt. Es kann eine Nachbearbeitung der vorermittelten Spannungszustände 41 vorgesehen sein. Die Nachbearbeitung kann die Anwendung maschinellen Lernens oder eines künstlichen neuronalen Netzwerks umfassen. Die vorermittelten Spannungszustände 41 können, gemeinsam mit den bestimmten Eigenschaften des umzuschlagenden Gutes als Zustände des umzuschlagenden Gutes, Teil der Kalibration 81 sein. Die bestimmten Eigenschaften des umzuschlagenden Gutes werden dabei mit dem jeweils im selben Testvorgang gemessenen vorermittelten Spannungszustand 41 assoziiert. Die Kalibration 81 kann die vorermittelten Spannungszustände 41 umfassen. Das in Fig. 6 gezeigte Verfahren kann für eine Vielzahl verschiedener umzuschlagender Güter wiederholt angewendet werden, wobei die vorermittelten Spannungszustände 41 einer jeder der wiederholten Anwendungen in die Kalibration 81 eingehen können.

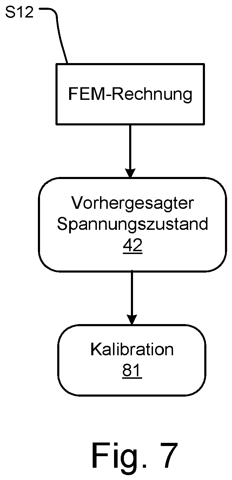

Fig. 7 zeigt ein Verfahren zur Ermittlung einer Kalibration 81, welche auf vorhergehender Berechnung durch FEM beruht S12. Dabei werden in der Anwendung der FEM in Schritt S12 vorhergesagte Spannungszustände 42 berechnet. Die vorhergesagten Spannungszustände 42 bezeichnen damit Spannungszustände 40 eines Haltelements 1, welche unter Annahme einer vorher festgelegten Belastung oder bei Ergreifen oder Umsetzen eines umzuschlagenden Gutes mit bestimmten Eigenschaften als Zustände des umzusetzenden Gutes erwartet werden. Die bestimmten Eigenschaften können eine Größe, Form, Masse, Konsistenz, Feuchtigkeit, Vorhandensein von haptisch erfassbaren Markierungen etc. sein. Die bestimmten Eigenschaften führen beispielsweise zu einer Ermittlung des entsprechenden Zustands des umzuschlagenden Gutes. Es kann eine Nachbearbeitung der vorhergesagten Spannungszustände 42 vorgesehen sein. Die Nachbearbeitung kann die Anwendung maschinellen Lernens oder eines künstlichen neuronalen Netzwerks umfassen. Die vorhergesagten Spannungszustände 42 können, gemeinsam mit den bestimmten Eigenschaften des umzuschlagenden Gutes als Zustände des umzuschlagenden Gutes, Teil der Kalibration 81 sein. Die bestimmten Eigenschaften des umzuschlagenden Gutes werden dabei mit dem jeweils berechneten vorhergesagten Spannungszustand 42 assoziiert. Die Kalibration 81 kann die vorhergesagten Spannungszustände 42 umfassen. Das in Fig. 6 gezeigte Verfahren kann für eine Vielzahl verschiedener umzuschlagender Güter wiederholt angewendet werden, wobei die vorhergesagten Spannungszustände 42 einer jeder der wiederholten Anwendungen in die Kalibration 81 eingehen können.

Es ist zu verstehen, dass die Kalibration 81 entweder auf vorermittelten Spannungszuständen 41 oder auf vorhergesagten Spannungszuständen 42, oder auf einer Kombination aus vorermittelten Spannungszuständen 41 und vorhergesagten Spannungszuständen 42 bestehen kann, aber auch andere Werte und/oder Zustände umfassen kann.

Fig. 8 zeigt ein Verfahren zur Ermittlung eines Zustands des umzuschlagenden Gutes 52 nach einer Ausführungsform. Es ist hier zu verstehen, dass im Vorlauf des hier dargestellten Verfahrens durch Messung ein Spannungszustand 40 des Haltelements 1 gemessen wurde sowie dass durch, beispielsweise eines der in Fig. 6 oder Fig. 7 gezeigten Verfahren, eine Kalibration 81 erzeugt wurde. Die Kalibration 81 umfasst also beispielsweise vorermittelte Spannungszustände 41 oder vorhergesagte Spannungszustände 42. In einem Schritt S22 wird der gemessene Spannungszustand 40 mit einer jeder den von der Kalibration 81 umfassten vorermittelten Spannungszuständen 41 oder vorhergesagten Spannungszuständen 42 verglichen. Dabei kann der Vergleich eine Prüfung umfassen, ob ein durch eine Sensoreinheit 70,71 gemessener Spannungswert oder Dehnungswert einem aus einem vorhergesagten Spannungszustand 42 erwarteten Spannungswert oder einem aus einem vorermittelten Spannungszustand 41 vorermittelten Spannungswert entspricht. Diese Prüfung kann für einen, mehrere oder alle durch Sensoreinheiten 70,71 gemessenen Werte durchgeführt werden.

Der Vergleichsschritt S22 kann die Anwendung maschinellen Lernens oder eines künstlichen neuronalen Netzwerks umfassen.

Aus dem Vergleich kann, sofern der gemessene Spannungszustand 40 einem vorermittelten Spannungszustand 41 oder einem vorhergesagten Spannungszustand 42 entspricht, der Zustand des umzuschlagenden Gutes 52 ermittelt werden.

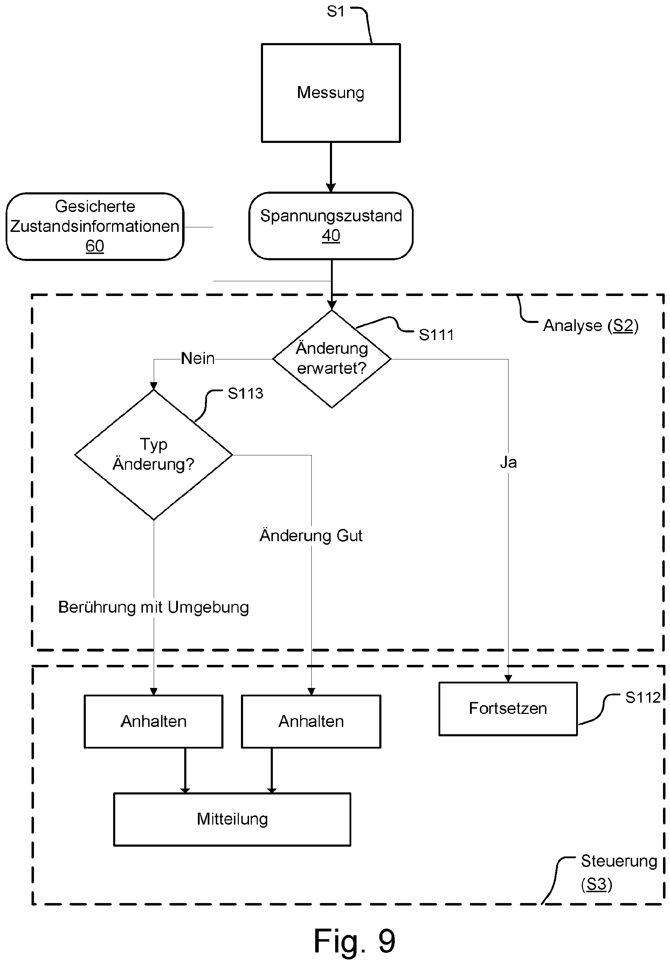

Fig. 9 zeigt schematisch eine Ausführungsform, in welcher der ermittelte Betriebszustand 50 das Ermitteln einer Berührung des Haltelements 1 oder der Greifvorrichtung oder des umzuschlagenden Guts mit der Umgebung des Haltelements, oder eine Änderung des Zustands des umzuschlagenden Gutes 52 umfasst.

Dazu wird zunächst in dem aus Fig. 1 bekannten Messschritt S1 der Spannungszustand 40 des Haltelements 1 ermittelt. Unter Verwendung der gesicherten Zustandsinformationen 60 wird eine Änderung des Spannungszustands in einem Analyseschritt S111 durchgeführt. Wenn eine Änderung erkannt wurde, wird zunächst unterschieden, ob die Änderung erwartet, beispielsweise weil zu diesem Zeitpunkt ein umzuschlagendes Gut ergriffen werden soll, oder unerwartet, beispielsweise während des Verfahrens eines umzuschlagenden Guts, oder während des lastlosen Verfahrens der Greifanordnung, geschieht. Eine Unterscheidung zwischen unerwarteten und erwarteten Änderungen kann beispielsweise durch die Zuweisung eines Parameters basierend auf dem erwarteten Betriebszustand geschehen. So kann ein Parameter beispielsweise während des Ergreifens eines umzuschlagenden Guts auf den Wert "1" gesetzt werden und auf den Wert "0" sonst, sodass eine Änderung des Spannungszustandes 40, während der Parameter den Wert "1" hält, als erwartet klassifiziert wird und als unerwartet sonst. Diese Unterscheidung zwischen erwarteten und unerwarteten Änderungen ist nur eine von offenbarungsgemäß möglichen Unterscheidungsmethoden und ist nicht als einschränkend anzusehen.

Wird in dem Analyseschritt S111 eine erwartete Änderung erkannt, so kann in einem Fortsetzungsschritt S112 der Betrieb der Greifvorrichtung fortgesetzt werden.

Wird in dem Analyseschritt S111 eine unerwartete Änderung erkannt, so kann in einem weiteren Analyseschritt S113 zwischen einer Berührung mit der Umgebung als Betriebszustand 50 und einer Änderung des Zustands des umzuschlagenden Guts als Betriebszustand 50 unterschieden werden. Diese Unterscheidung kann beispielsweise durch die Erkennung eines asymmetrischen Spannungszustandes, wie weiter unten beschrieben, oder durch die zeitliche Analyse der Änderung, wie ebenfalls weiter unten beschrieben, vollführt werden. Die Unterscheidung zwischen einer Berührung mit der Umgebung als Betriebszustand 50 und einer Änderung des Zustands des umzuschlagenden Guts als Betriebszustand 50 ist dabei als optional anzusehen, das offenbarungsgemäße Verfahren kann auch lediglich die Erkennung einer Berührung mit der Umgebung als Betriebszustand 50 oder die Erkennung der Änderung des Zustands des umzuschlagenden Guts umfassen. Dabei können die Analyseschritte S111 und S113 als Teil des Analyseschritts S2, hier durch einen gestrichelten Kasten illustriert, aus Fig. 1 angesehen werden. Der Analyseschritt S2 kann dabei ein Verfahren entsprechend dem untenstehend in Fig. 8 gezeigten Verfahren umfassen.

Wird eine Berührung mit der Umgebung als Betriebszustand 50 erkannt, so kann das Verfahren ein Anhalten des Betriebszyklus umfassen. Hierdurch können Beschädigungen der Haltelemente 1, der Greifvorrichtung, der Greifvorrichtung, des umzuschlagenden Guts und/oder der Umgebung vermieden werden. Ferner kann als Folge der Erkennung einer Berührung mit der Umgebung die Erzeugung eines Signals oder einer Mitteilung beinhalten, die dem Bediener eine Unterbrechung des Betriebszyklus anzeigt. Abgesehen von dem Anhalten des Betriebszyklus oder der Erzeugung einer Mitteilung können auch andere Steuerungen der Greifvorrichtung offenbarungsgemäß vorgesehen sein.

Wird eine Änderung des Zustands des umzuschlagenden Guts als Betriebszustand 50 erkannt, welche beispielsweise in einem Verrutschen des umzuschlagenden Guts, von Teilen des umzuschlagenden Guts oder ein Entgleiten des umzuschlagenden Guts oder von Teilen des umzuschlagenden Guts, bestehen kann, so kann das Verfahren ein Anhalten des Betriebszyklus umfassen. Der Begriff "Entgleiten" ist dabei als ein Ausfallen des umzuschlagenden Guts aus dem Zustand des Gehalten-Werdens durch die Greifvorrichtung zu verstehen. Ferner kann als Folge der Änderung des Zustands des umzuschlagenden Guts als Betriebszustand 50 die Erzeugung eines Signals oder einer Mitteilung beinhalten, die einem Bediener eine Unterbrechung des Betriebszyklus anzeigt. Abgesehen von dem Anhalten des Betriebszyklus oder der Erzeugung einer Mitteilung können auch anderer Steuerungen der Greifvorrichtung offenbarungsgemäß vorgesehen sein. Hierdurch können wiederum Beschädigungen der Haltelemente 1, der Greifanordnung, der Greifvorrichtung, des umzuschlagenden Guts und/oder der Umgebung vermieden werden. Das Anhalten des Betriebs und das Fortsetzen des Betriebs können als Teil des Steuerungsschritts S3, hier durch einen gestrichelten Kasten illustriert, aus Fig. 1 angesehen werden.

Das Erkennen von Änderungen des Zustands des umzuschlagenden Guts als Betriebszustand 50 und/oder das Erkennen von Berührungen mit der Umgebung als Betriebszustand 50 kann dazu genutzt werden, die Betriebssicherheit einer Anlage, in welcher die offenbarungsgemäße Greifvorrichtung angewendet wird, oder der Greifvorrichtung an sich, zu erhöhen.

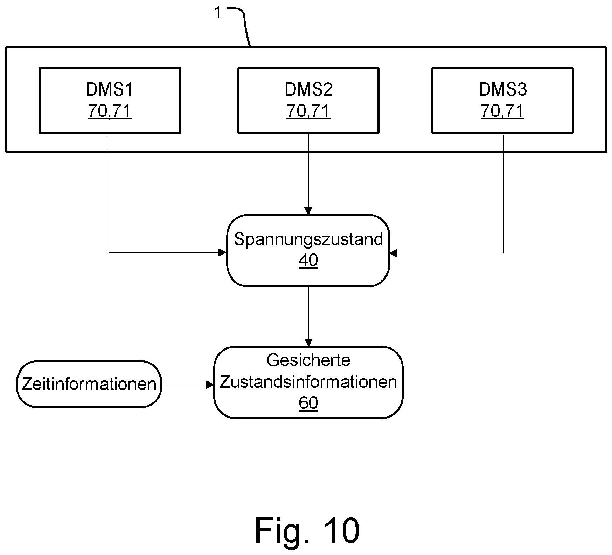

Fig. 10 zeigt schematisch das Ermitteln eines Spannungszustandes 40 unter Verwendung von Messungen, welche durch Sensoreinheiten 70, welche hier als Sensoreinheiten mit Spannungsmessvorrichtungen 71 dargestellt sind, ermittelt werden, die ein Teil eines Haltelements 1 sein können. Die Zahl der Sensoreinheiten 70,71 kann von der in Fig. 10 gezeigten Zahl abweichen, jedoch werden zweckmäßig wenigstens zwei Sensoreinheiten 70,71 vorgesehen, welche an voneinander verschiedenen Positionen an dem Haltelement 1 vorgesehen sind. Die Messwerte der hier beispielhaft gezeigten Sensoreinheiten 70,71, bezeichnet DMS1, DMS2 und DMS3, gehen gemeinsam in den Spannungszustand 40 ein, wobei der Spannungszustand 40 hier beispielsweise als Datenstruktur zu verstehen ist, in welcher jeder Messwert einer Sensoreinheit 70 zugeordnet ist. Auf Basis des Spannungszustands 40 können dann, wie oben beschrieben, die gesicherten Zustandsinformationen 60 erzeugt werden, welche eine Zeitabfolge, mit Zeitinformationen, der Spannungszustandsinformationen und/oder der Betriebszustandsinformationen enthalten. Statt einer Spannung kann durch die Sensoreinheiten 70,71, hier DMS1, DMS2 und DMS3, auch ein Parameter gemessen werden, welcher Rückschlüsse auf die gemessene Spannung zulässt. Dieser Parameter kann eine der Gruppe von Parametern sein, welche Kraft, Dehnung, Streckung oder Biegung umfassen. Insbesondere können die DMS1, DMS2 und DMS3 Dehnungsmessstreifen umfassen oder sein.

Ein asymmetrischer Spannungszustand kann beispielsweise dann vorliegen, wenn die durch die Sensoreinheiten 70,71 ermittelten Spannungen voneinander abweichen. Ein asymmetrischer Spannungszustand kann jedoch auch aufgrund einer Kalibration 81 erkannt werden, wenn die durch die Mehrzahl an Sensoreinheiten 70,71 gemessenen Spannungen ein bestimmtes Verhältnis zueinander haben, ein bestimmtes Verhältnis zueinander nicht haben oder bestimmte Absolutwerte annehmen.

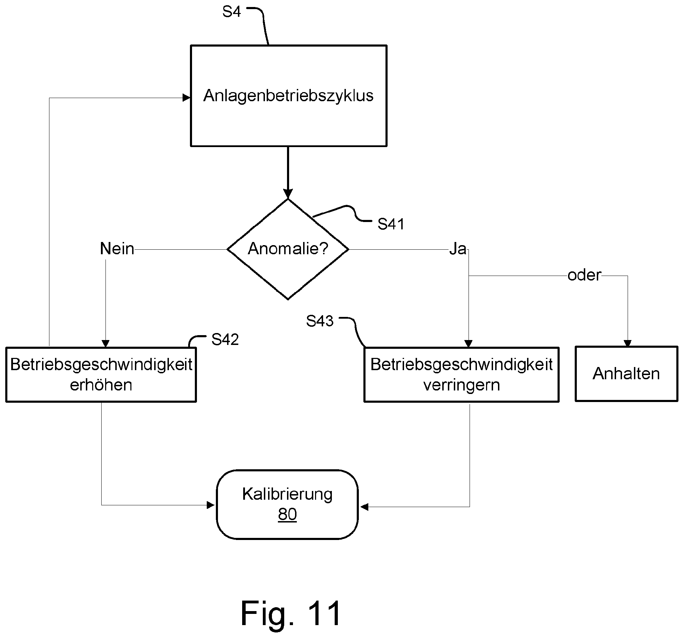

Fig. 11 illustriert schematisch ein Verfahren zur Optimierung eines Anlagenzyklus entsprechend einer Ausführungsform. Hierzu kann ein Optimierungsmodus für die Greifvorrichtung im Einzelnen oder der Anlage umfassen, in welcher die Greifvorrichtung zum Einsatz kommt, umfassen.

Eine Optimierung kann beispielsweise ein Ermitteln einer optimalen Betriebsgeschwindigkeit der Anlage umfassen, in welcher die Greifvorrichtung zum Einsatz kommt. Dazu wird zunächst die Betriebsgeschwindigkeit der Anlage auf einen vorher festgelegten Wert eingestellt und die Anlage in Betrieb gesetzt. Wiederholt kann dann das Optimierungsverfahren, beginnend bei Schritt S4, durchgeführt werden. Mittels des offenbarungsgemäßen Verfahrens wird in einem Überwachungsschritt S41 überwacht, ob im Betrieb der Anlage Anomalien auftauchen.

Anomalien können beispielsweise eine Berührung mit der Umgebung als Betriebszustand 50 oder eine Änderung des Zustands des umzuschlagenden Guts als Betriebszustand 50 sein und nach dem Verfahren, welches in Fig. 9 gezeigt ist, erkannt werden. Wird keine Anomalie erkannt, so kann die Betriebsgeschwindigkeit der Anlage in einem Schritt S42 erhöht werden und das Optimierungsverfahren wird bei Schritt S4 von vorn begonnen, bis entweder eine Anomalie auftritt oder eine erwünschte Betriebsgeschwindigkeit erreicht ist. Ist eine erwünschte Betriebsgeschwindigkeit erreicht, so kann das Verfahren angehalten werden und der normale Betrieb der Anlage in der erwünschten Betriebsgeschwindigkeit vollzogen werden.

Wenn eine Anomalie auftritt, so wird entweder der Betrieb in Reaktion auf den Überwachungsschritt S41 unterbrochen oder die Betriebsgeschwindigkeit auf eine Geschwindigkeit, welche eine sichere Maximalgeschwindigkeit genannt werden kann, in einem Schritt S43 so weit verringert, dass keine Anomalie auftritt. Ist die sichere Maximalgeschwindigkeit erreicht, so kann das Verfahren angehalten werden und der normale Betrieb der Anlage in der erwünschten Betriebsgeschwindigkeit vollzogen werden. Alternativ kann vorgesehen sein, dass der Betrieb mit der verringerten Geschwindigkeit fortgesetzt wird. In diesem Fall folgt auf den Schritt S43 der Schritt S4. Die somit ermittelte Betriebsgeschwindigkeit kann in eine Kalibrierung 80 eingehen.

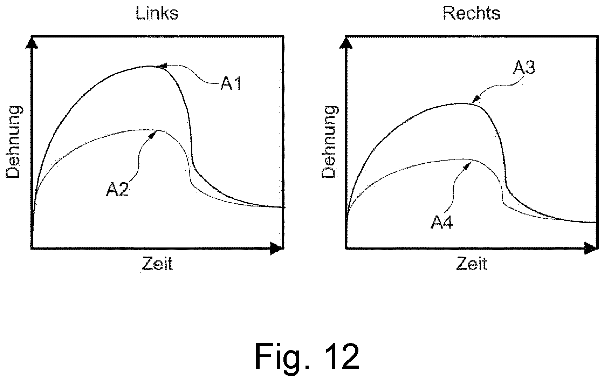

Fig. 12 illustriert die Ermittlung der zeitlichen Entwicklung eines Spannungszustands 40 anhand eines Haltelements, welches mit vier Sensoreinheiten 71 ausgestattet ist, wobei diese hier beispielhaft und nicht einschränkend als DMS illustriert sind. Die DMS sind dabei beispielsweise paarweise in einem linken (links) und einem rechten (rechts) Abschnitt im Biegebereich 4 (obere DMS) und im Haltebereich 3 (untere DMS) angeordnet. Die in Fig. 12 beispielhaft gezeigte Ermittlung des Spannungszustands umfasst dabei ein Greifen eines umzuschlagenden Guts durch die Greifvorrichtung zu einem Beginn des Greifvorgangs und ein Loslassen des umzuschlagenden Guts durch die Greifvorrichtung zu einem Ende des Greifvorgangs. Die Dehnung eines DMS ist auf einer y-Achse abgetragen und eine Zeitdauer des Greifvorgangs ist auf einer x-Achse abgetragen. Eine maximale Dehnung eines DMS ist als die Amplitude bezeichnet. Dabei ist eine Amplitude A1 die maximale Dehnung des linken oberen DMS, eine Amplitude A2 die maximale Dehnung des linken unteren DMS, eine Amplitude A3 die maximale Dehnung des rechten oberen DMS und eine Amplitude A4 die maximale Dehnung des rechten unteren DMS. Die Amplituden geben den Spannungszustand 40 des Haltelements wieder. Durch Vergleich eines Spannungszustands 40 in einem Greifvorgang mit einem Spannungszustand 40 eines zweiten Greifvorgangs können Informationen zu einem Zustand des umzuschlagenden Guts ermittelt werden. Beispielsweise können aus ähnlichen Spannungszuständen 40 Informationen zu einem Zustand des umzuschlagenden Guts der ähnlichen Form der umzuschlagenden Güter ermittelt werden.

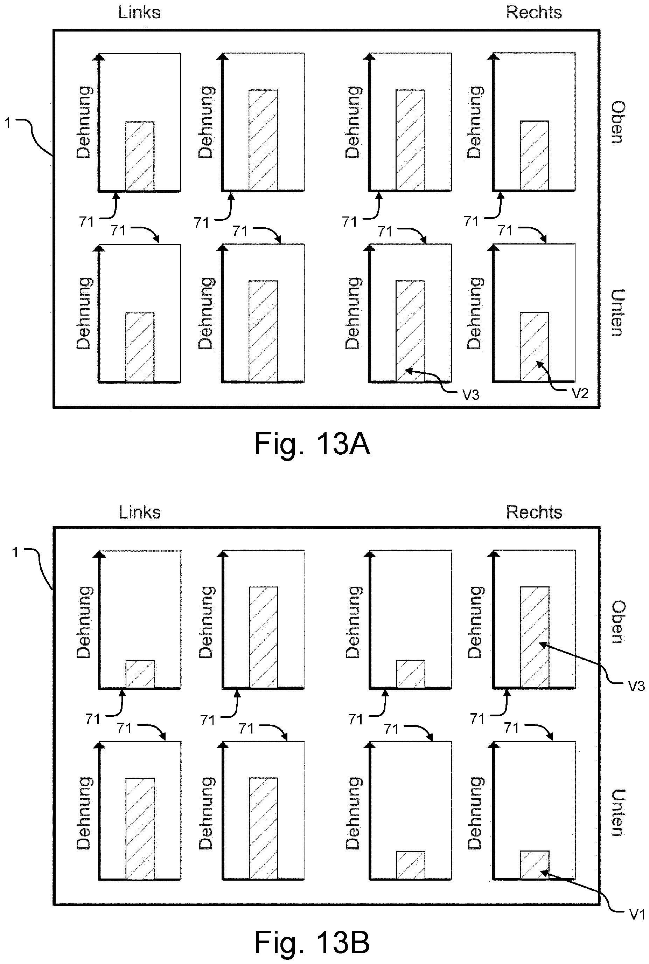

Figs. 13A und 13B zeigen je eine Messung eines Spannungszustandes 40 eines Haltelements 1. Die Sensoreinheiten 71 sind hier schematisch durch die durch sie zur Verfügung gestellten Dehnungsmessungen zu einem Zeitpunkt illustriert. Es ist zu beachten, dass, wie hierin obenstehend beschrieben, die Sensoreinheiten 71 Sensoreinheiten 70 sind, welche Spannungsmessvorrichtungen umfassen, wobei die Spannungsmessvorrichtungen insbesondere Dehnungsmesstreifen umfassen oder sein können. Die Platzierung der Sensoreinheiten 70 an dem Haltelement 1 in einer linken, rechten, oberen und unteren Richtung ist in einer lateralen Sicht von außen gezeigt.

Fig. 13A zeigt beispielsweise eine Messung eines ersten Spannungszustands durch acht Sensoreinheiten 71, welche an acht voneinander verschiedenen Positionen an dem Haltelement 1 vorgesehen sind. Es ist, wie obenstehend beschrieben, zu beachten, dass die Sensoreinheiten 71 nicht nur außen an dem Haltelement 1 angebracht sein können, sondern stattdessen auch in die Struktur des Haltelements 1 eingebettet sein können. Gezeigt sind ferner beispielsweise verschiedene Dehnungswerte, welche auch als Spannungswerte bezeichnet werden können, V2 und V3, welche bei der Ermittlung eines Spannungszustandes 40 gemessen werden können. Hier bezeichnet V2 einen niedrigeren Dehnungswert als V3. In dem hier gezeigten Beispiel ist die durch die Sensoreinheiten 71 gemessene Dehnung in den, von links nach rechts betrachteten, mittleren Positionen größer (V3) als in den, ebenso von links nach rechts betrachteten, äußeren Positionen. Ein solcher, oder äquivalenter, Spannungszustand kann beispielsweise bei Umsetzen eines regelmäßig geformten Körpers als umzuschlagendes Gut, welcher im Bereich der, von links nach rechts betrachteten, mittleren Positionen gehalten wird, auftreten. Nach dem erfindungsgemäßen Verfahren kann mittels einer solchen Messung der Betriebszustand und insbesondere der Zustand des umzuschlagenden Gutes 52 ermittelt werden. In die Ermittlung können auch die Beträge bzw. die Größe der gemessenen Dehnungswerte - V1, etc. - und deren relative Größe zueinander, eingehen. Die Ermittlung des Zustands des umzuschlagenden Gutes 52 kann beispielsweise auf Vergleich der Messwerte, unter Beachtung der Position der Sensoreinheiten 71 an dem Haltelement 1, mit vorhergesagten Spannungszuständen 42 basieren.

Fig. 13B zeigt beispielsweise eine Messung eines zweiten Spannungszustands analog zu dem in Fig. 13A gezeigten Beispiel. Gezeigt sind hier verschiedene Dehnungszustände V1 und V3, welche bei der Ermittlung eines Spannungszustandes 40 gemessen werden können. Hier bezeichnet V1 einen niedrigeren Dehnungswert als V2 und V3. In dem hier gezeigten Beispiel ist die durch die Sensoreinheiten 71 gemessene Dehnung in, oberen von links nach rechts betrachteten, Positionen abwechselnd größer (V3) und kleiner (V1). In den unteren Positionen ist die durch die Sensoreinheiten 71 gemessene Dehnung in, oberen von links nach rechts betrachteten, Positionen unregelmäßig größer (V3) und kleiner (V1). Ein solcher, oder äquivalenter, Spannungszustand kann beispielsweise beim Umsetzen eines unregelmäßig geformten Körpers als umzuschlagendes Gut, auftreten. Ferner kann ein solcher, oder äquivalenter, Spannungszustand beispielsweise bei Präsenz von haptisch erfassbaren Markierungen, wie obenstehend beschrieben, an dem umzuschlagenden Gut auftreten. Nach dem erfindungsgemäßen Verfahren kann mittels einer solchen Messung der Betriebszustand und insbesondere der Zustand des umzuschlagenden Gutes 52 ermittelt werden. Die Ermittlung des Betriebszustands, insbesondere des Zustands des umzuschlagenden Gutes 52 aber auch andere Formen des Betriebszustands, kann beispielsweise auf Vergleich der Messwerte, unter Beachtung der Position der Sensoreinheiten 71 an dem Haltelement 1, mit vorhergesagten Spannungszuständen 42 basieren. Die Ermittlung des Zustands des umzuschlagenden Gutes 52 kann beispielsweise auf Vergleich der Messwerte, unter Beachtung der Position der Sensoreinheiten 71 an dem Haltelement 1, mit vorermittelten Spannungszuständen 41 basieren. Die Ermittlung des Zustands des umzuschlagenden Gutes 52 kann beispielsweise auch auf einer Kalibration 81 basieren.

Es ist zu verstehen, dass die genannten Dehnungswerte V1, V2, V3 etc. Platzhalter für physikalische Messwerte sind. Die physikalischen Messwerte können eine Dehnung in einer Längeneinheit, beispielsweise Meter, Millimeter, Fuß etc., eine Spannung, beispielsweise in Einheiten von Pascal, p/inch² etc., oder von diesen Einheiten abgeleitete Einheiten darstellen. Die physikalischen Messwerte können auch Größen sein, welche eine Herleitung, Ableitung oder sonstige Berechnung einer Dehnung oder Spannung zulassen.

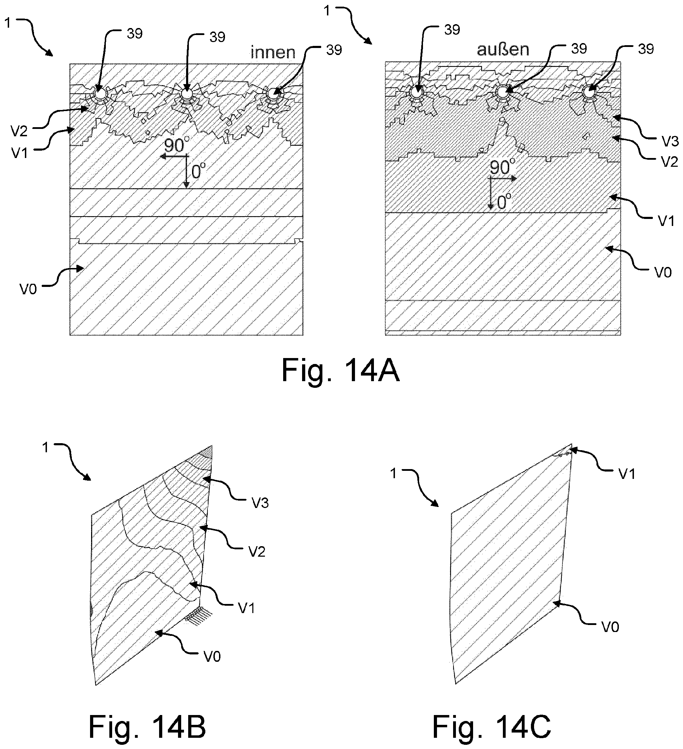

Figs. 14A, 14B und 14C zeigen beispielhaft Illustrationen mehrerer vorhergesagter Spannungszustände 42 eines Haltelements 1, wobei hier insbesondere ein Laschenkörper als Teil eines Haltelements gezeigt ist. Es ist zu verstehen, dass die hier dargestellte Form des Haltelements 1 ein nicht einschränkendes Beispiel ist. Das offenbarungsgemäße Verfahren kann auf der Verwendung anders ausgeführter Haltelemente 1 beruhen. Das Haltelement 1 umfasst hier drei Bohrungen 39.

Fig. 14A zeigt ein Haltelement 1 in einer Draufsicht von außen und in einer Draufsicht von innen, wobei Bereiche mit gleichen oder ähnlichen Spannungswerten bzw. Dehnungswerten V0, V1, V2, V3, welche den Dehnungswerten V1, V2, V3 in Fig. 13 entsprechen können, eingezeichnet sind.

Eine Sensoreinheit 70,71, welche in einem Bereich mit einem bestimmten Dehnungswert angebracht ist, misst den entsprechenden Dehnungswert. Beispielsweise würde eine Sensoreinheit 70, 71, welche in der Innenansicht in Fig. 14A in dem Bereich mit dem Dehnungswert V1 angebracht ist, den Dehnungswert V1 messen. Analog bei Anbringung auf der Innenseite. Fig. 14A zeigt einen vorhergesagten Spannungszustand 42 eines Haltelements 1 wie er beispielsweise beim Ergreifen eines Umzuschlagenden Gutes 52 auftreten kann. Ein Vergleich eines gemessenen Spannungszustands 40 kann beispielsweise umfassen, zu vergleichen, ob eine in dem Bereich mit dem Dehnungswert V1 angebrachte Sensoreinheit 70,71, den Dehnungswert V1 misst und in anderen Bereichen angebrachte Sensoreinheiten 70,71 den analog vorhergesagten Dehnungswert. In diesem Fall kann entschieden werden, dass der gemessene Spannungszustand 40 dem vorhergesagten Spannungszustand 42 entspricht.

Fig. 14B zeigt eine perspektivische Ansicht eines Haltelements 1, hier ohne Bohrungen 39, wobei Bereiche mit gleichen oder ähnlichen Spannungswerten bzw. Dehnungswerten V0, V1, V2, V3, welche den Dehnungswerten V1, V2, V3 in Fig. 13 entsprechen können, eingezeichnet sind. Der in Fig. 14B gezeigte vorhergesagte Spannungszustand 42 kann beispielsweise einem Spannungszustand 40 entsprechen, welcher bei einer Berührung des Haltelements 1 mit der Umgebung auftritt, deren Erkennung mitunter in der in Fig. 9 gezeigten Ausführungsform vorgesehen ist. Auch kann der in Fig. 14B gezeigte vorhergesagte Spannungszustand 42 beispielsweise einem Spannungszustand 40 entsprechen, welcher bei dem Umsetzen des umzuschlagenden Gutes 52 auftritt, während der Zustand des umzuschlagenden Gutes 52 bestimmt wird, wie es in der in Fig. 9 gezeigten Ausführungsform vorgesehen ist. Fig. 14C zeigt eine perspektivische Ansicht eines Haltelements 1, hier ebenfalls ohne Bohrungen 39, wobei Bereiche mit gleichen oder ähnlichen Spannungswerten bzw. Dehnungswerten V0, V1 welche den Dehnungswerten V1, V2, V3 in Fig. 13 entsprechen können, eingezeichnet sind. Der in Fig. 14C gezeigte vorhergesagte Spannungszustand 42 kann beispielsweise einem Spannungszustand 40 entsprechen, welcher bei dem Versagen eines Bauteils, dessen Erkennung mitunter in der in Fig. 11 gezeigten Ausführungsform vorgesehen ist, auftritt.

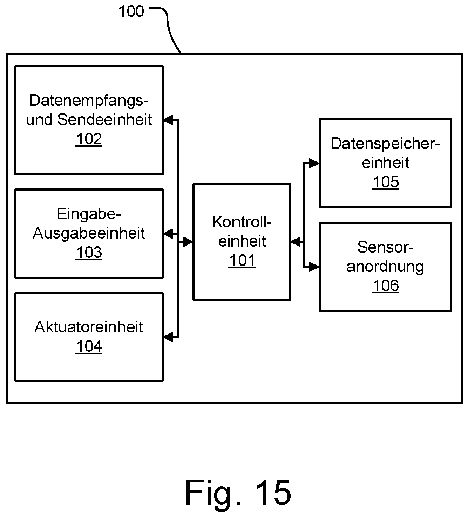

Fig. 15 ist eine schematische Darstellung der Einheiten der Greifvorrichtung 100 zur Umsetzung des offenbarungsgemäßen Verfahrens. Es ist zu beachten, dass eine äußere Form der Greifvorrichtung 100 beispielsweise der Fig. 3 entspricht. Die Greifvorrichtung 100 umfasst beispielsweise eine Kontrolleinheit 101, eine optionale Datenempfangs- und Sendeeinheit 102, eine optionale Eingabe- und Ausgabeeinheit 103, eine Aktuatoreinheit 104, eine Datenspeichereinheit 105 und eine Sensoranordnung 106. Die Kontrolleinheit 101 ist derart ausgebildet, dass sie die offenbarungsgemäßen Analyseschritte auf Basis der durch die Sensoranordnung 106 gemessenen Messwerte durchführen kann. Die Kontrolleinheit 101 ist außerdem derart ausgebildet, dass sie Steuersignale, welche auch Steuerbefehle sein können, erzeugen kann, auf deren Basis die Aktuatoreinheit 104 Aktuatoren der Greifvorrichtung 100 ansteuert, um die Lage der Greifvorrichtung in der Umgebung zu verändern oder um die Greifvorrichtung 100 zum Erfassen eines umzuschlagenden Guts oder zum Lösen eines erfassten umzuschlagenden Guts zu instruieren. Die Greifvorrichtung umfasst ferner eine Datenspeicherungseinheit 105, in welcher mittels eines Random-Access-Memory (RAM), eines Caches oder einer Festplatte Daten durch die Kontrolleinheit 101 gespeichert und ausgelesen werden können. Die Daten können beispielsweise die gesicherten Zustandsinformationen 60, die Spannungszustände 40 oder die Betriebszustände 50 sein. Die Kontrolleinheit 101 kann mittels der optionalen Datenempfangs- und Sendeeinheit 102, Daten, Signale oder Anweisungen von externen Quellen empfangen. Externe Quellen können beispielsweise elektronische Geräte wie Fernsteuervorrichtungen, Smartphones oder Benutzerterminals, eine Kontrolleinheit der die Greifvorrichtung 100 beinhaltenden Anlage oder Ähnliches sein. Ebenso kann vorgesehen sein, mittels der Datenempfangs- und Sendeeinheit 102 Informationen an externe Geräte zu übertragen. Beispielsweise können die in der Datenspeichereinheit 105 gespeicherten Daten an externe Geräte übertragen werden, oder dem Benutzer des externen Gerät Informationen, welche den Betriebszustand der Greifvorrichtung 100 oder der die Greifvorrichtung 100 beinhaltenden Anlage übertragen werden. Die Datenübertragung kann mittels entsprechender Signalübertragungsstandards wie Bluetooth (eingetragene Marke), WLAN oder eine Kabelverbindung oder Ähnliches geschehen, wofür die Datenempfangs- und Sendeeinheit 102 entsprechend ausgebildet ist. Die Greifvorrichtung 100 kann ferner eine Eingabe- und Ausgabeeinheit 103 umfassen, mittels welcher der Benutzer in die Lage versetzt wird, die Greifvorrichtung zu steuern oder ihren Betriebszustand zu beeinflussen. Die Eingabe- und Ausgabeeinheit 103 kann ferner mittels einer geeigneten Vorrichtung Statusinformationen dem Benutzer zugänglich machen. Die Eingabe- und Ausgabeeinheit 103 kann insbesondere eine Tastatur oder ähnliche Ausgabegeräte ein Display oder Ähnliches oder einen Lautsprecher umfassen.

Die Kontrolleinheit 101 kann insbesondere ein Personalcomputer (PC), ein Microprozessor oder eine ähnliche elektronische Vorrichtung sein. Insbesondere kann die Kontrolleinheit 101 auch mit einer Kontrolleinheit der die Greifvorrichtung 100 beinhaltenden Anlage oder einer äquivalenten Einheit identisch sein. Ferner kann die Kontrolleinheit auch als externes Gerät ausgebildet sein. Auch kann die Funktionalität aller dargestellten Einheiten auch als Computerprogramm oder Applikation vorgesehen sein, sofern dieses der Steuerung einer Greifvorrichtung 100 wie beschrieben dient.

Ferner kann die Sensoranordnung 106 eine Mehrzahl von Sensoreinheiten 70 oder von Sensoreinheiten 71 umfassen, welche an einer Mehrzahl von Haltelementen 1 vorgesehen sind. Die Sensoreinheiten können insbesondere Dehnungsmesstreifen umfassen.

Es ist zu verstehen, dass die hier gezeigten Einheiten lediglich dem Verständnis geschuldet als separate Einheiten dargestellt sind. Die dargestellten Einheiten können offenbarungsgemäß auch, sofern zweckmäßig, in einer kleineren Zahl an Einheiten realisiert werden, solange die Funktionalität dieselbe ist. Insbesondere kann beispielsweise die Funktionalität der Kontrolleinheit 101 auch die Funktionalität der Datenspeichereinheit 105 umfassen. Dem Fachmann können andere Kombinationen oder Vereinigungen von Einheiten offensichtlich sein, deren Umsetzung offenbarungsgemäß vorgesehen sein kann.

Das offenbarungsgemäße Verfahren kann insbesondere Folgendes umfassen:
(1) Verfahren zum Betrieb einer Greifvorrichtung, aufweisend eine Greifanordnung mit Haltelementen, welche eine teilweise elastisch verformbare Struktur aufweisen, zum Halten eines umzuschlagenden Gutes, umfassend: Messung eines Spannungszustandes wenigstens eines der Haltelemente mittels Spannungsmessvorrichtungen; Ermittlung eines momentanen Betriebszustandes der Greifvorrichtung auf Basis des Spannungszustandes des Haltelements; und Steuerung der Greifvorrichtung auf Basis des ermittelten Betriebszustandes.
(2) Verfahren nach (1), wobei das Haltelement einen plattenförmig ausgebildeten Laschenkörper und eine Sensoreinheit aufweist, welche Spannungsmessvorrichtungen umfasst.
(3) Verfahren nach einem von (1) oder (2), wobei das Haltelement ferner mit einem an einer Flachseite des Laschenkörpers ausgebildeten Befestigungsbereich an dem der Laschenkörper an einer Trägervorrichtung fixierbar ist und mit einem an der Flachseite ausgebildeten Haltebereich, über den eine Haltekraft auf das umzuschlagende Gut aufbringbar ist, ausgebildet ist, wobei der Laschenkörper aus einem FVK-Werkstoff ausgebildet ist, und zwischen dem Befestigungsbereich und dem Haltebereich ein Biegebereich ausgebildet ist, in dem der Laschenkörper bei auf das umzuschlagende Gut aufgebrachter Haltekraft elastisch verformbar ist, und wobei der Biegebereich gegenüber dem Befestigungsbereich und/oder dem Haltebereich eine reduzierte Biegefestigkeit aufweist, und die Spannungsmessvorrichtungen Dehnungsmesstreifen umfassen.
(4) Verfahren nach einem von (2) oder (3), wobei die Sensoreinheit so an dem Haltelement vorgesehen ist, dass mittels der Dehnungsmessstreifen eine Spannung in einem Bereich des Haltelements gemessen werden kann, welcher elastisch verformbar ist.
(5) Verfahren nach einem von (1) bis (4), wobei die Greifanordnung insbesondere eine Baustoffgreifanordnung zum Umschlag einer Baustoffelementlage ist, und das umzuschlagende Gut die Baustoffelementlage ist.
(6) Verfahren nach einem von (1) bis (5), wobei die Baustoffelementlage eine Lage von Baustoffelementen ist und die Baustoffelemente Ziegel sind.
(7) Verfahren nach einem von (1) bis (6), wobei der momentane Betriebszustand einen quantitativen Wert der momentan durch das Haltelement auf das umzuschlagende Gut aufgebrachten Haltekraft umfasst.
(8) Verfahren nach einem von (1) bis (7), wobei der momentane Betriebszustand eine Berührung des Haltelements oder der Greifanordnung mit einer Umgebung der Greifvorrichtung umfasst.
(9) Verfahren nach einem von (1) bis (8), wobei der momentane Betriebszustand eine Position des Haltelements oder der Greifanordnung relativ zu der Umgebung der Greifvorrichtung umfasst.
(10) Verfahren nach einem von (1) bis (9), wobei der momentane Betriebszustand einen Anlagenzustand einer Anlage, in welcher die Greifvorrichtung eingesetzt ist, umfasst.
(11) Verfahren nach einem von (1) bis (10), wobei der momentane Betriebszustand einen Zustand des umzuschlagenden Gutes umfasst.
(12) Verfahren nach (11), wobei der Zustand des umzuschlagenden Gutes eine relative Anordnung zueinander oder ein Fehlen von Teilen des umzuschlagenden Gutes umfasst.
(13) Verfahren nach einem von (11) oder (12), wobei der Zustand des umzuschlagenden Gutes eine Größe des umzuschlagenden Gutes oder eine Größe von Teilen des umzuschlagenden Gutes umfasst.
(14) Verfahren nach einem von (1) bis (13), wobei die Steuerung der Greifvorrichtung eine Optimierung eines Betriebszyklus der Greifvorrichtung umfasst.
(15) Verfahren nach einem von (1) bis (14), wobei die Steuerung der Greifvorrichtung eine Optimierung eines Betriebszyklus der Anlage, in welcher die Greifvorrichtung eingesetzt ist, umfasst.
(16) Verfahren nach einem von (1) bis (15), wobei die Steuerung der Greifvorrichtung eine Vermeidung oder Neutralisierung von Kollisionen des Haltelements oder der Greifanordnung mit der Umgebung der Greifvorrichtung umfasst.
(17) Verfahren nach einem von (1) bis (16), wobei der momentane Betriebszustand einen quantitativen Wert der durch das umzuschlagende Guts ausgeübten Gewichtskraft umfasst.
(18) Verfahren nach einem von (14) bis (17), wobei die Optimierung des Betriebszyklus der Greifvorrichtung ein Ermitteln einer optimalen Beschleunigung oder Verzögerung einer Bewegung der Greifvorrichtung umfasst.
(19) Verfahren nach einem von (14) bis (18), wobei die Optimierung des Betriebszyklus der Greifvorrichtung ein Justieren der Haltekraft während des Greifvorgangs umfasst.
(20) Verfahren nach einem von (11) bis (19), wobei der Zustand des umzuschlagenden Gutes eine Form des umzuschlagenden Guts umfasst.
(21) Verfahren nach einem von (11) bis (20), wobei der Zustand des umzuschlagenden Gutes eine Festigkeit, eine Konsistenz und/oder eine Härte des umzuschlagenden Guts umfasst.
(22) Verfahren nach einem von (11) bis (21), wobei die Ermittlung des Zustands des umzuschlagenden Gutes auf Basis des Spannungszustands des Haltelements mittels eines Schwellwerts oder mittels eines künstlichen neuronalen Netzwerks durchgeführt wird.
(23) Verfahren nach (22), wobei das künstliche neuronale Netzwerk mittels Trainingsdaten, welche durch Testgreifvorgänge erzeugt werden, trainiert wird.
(24) Verfahren nach (22), wobei das künstliche neuronale Netzwerk mittels Trainingsdaten, durch Anwendung der Finite-Element-Methode erzeugt werden, trainiert wird.
(25) Verfahren nach einem von (11) bis (21), wobei der Zustand des umzuschlagenden Gutes die Präsenz von dafür vorgesehenen, haptisch erfassbaren, Markierungen umfasst.
(26) Verfahren nach (25), wobei die Markierungen Informationen über das umzuschlagende Gut kodieren.
(27) Verfahren nach einem von (1) bis (26), wobei die Ermittlung des momentanen Betriebszustands eine Berechnung einer Korrelation zwischen einer durch einen Aktuator aufgebrachten Haltekraft und der durch die Spannungsmessvorrichtungen gemessenen Haltekraft umfasst.
(28) Verfahren nach (23), wobei die Ermittlung des momentanen Betriebszustands ein Erkennen eines momentanen Versagens einer Komponente oder ein Vorhersagen eines Versagens einer Komponente auf Basis der Korrelation der durch einen Aktuator aufgebrachten Haltekraft und der durch die Spannungsmessvorrichtungen gemessenen Haltekraft umfasst.
(29) Greifvorrichtung zum Halten eines umzuschlagenden Gutes, umfassend: Greifanordnung mit wenigstens einem Haltelement, an welchem eine Sensoreinheit ausgebildet ist, wobei die Sensoreinheit Dehnungsmesstreifen umfasst, und eine Steuerungseinheit, welche zur Durchführung des Verfahrens nach einem von (1) bis (28) ausgebildet ist.
(30) Greifvorrichtung nach (29), wobei die Sensoreinheit so an dem Haltelement vorgesehen ist, dass mittels der Dehnungsmessstreifen eine Spannung in einem Bereich des Haltelements gemessen werden kann, welcher elastisch verformbar ist.
(31) Greifvorrichtung nach (29), wobei eine Mehrzahl von Sensoreinheiten in einer zweidimensionalen Anordnung an dem Haltelement angeordnet ist.
(32) Greifvorrichtung nach (29), wobei eine Mehrzahl von Sensoreinheiten in einer dreidimensionalen Anordnung in die Struktur des Haltelements eingebettet ist.
(32) Verwendung der Greifvorrichtung nach einem von (29) bis (32) zur Durchführung des Verfahrens nach einem von (1) bis (28).

### BEZUGSZEICHENLISTE

- S1: Messschritt
- S2: Analyseschritt
- S3: Steuerungsschritt
- S4: Betriebszyklus
- S11: Testvorgang
- S12: Finite-Element-Methode
- S22: Vergleichsschritt
- V1 - V4: Dehnungswerte
- A1 - A4: Amplituden
- 1: Haltelement
- 1': Haltelement in anderer Ausführung
- 2: Befestigungsbereich
- 3: Haltebereich
- 4: Biegebereich
- 5-7: freibleibend
- 8: Haltekante
- 9-14: freibleibend
- 15: Einschnitt
- 16: Haltefinger
- 17: Winkelschiene
- 18: Rollenschuh
- 19: Führungsschiene
- 20: Quertraverse
- 21: Anschlussplatte
- 22: Stellzylinder
- 23-38: freibleibend
- 39: Bohrung
- 40: Spannungszustand
- 41: Vorermittelter Spannungszustand
- 42: Vorhergesagter Spannungszustand
- 43-49: freibleibend
- 50: Betriebszustand
- 51: Haltekraft
- 52: Zustand des umzuschlagenden Gutes
- 53-59: freibleibend
- 60: Gesicherte Zustandsinformationen
- 61-69: freibleibend
- 70: Sensoreinheit
- 71: Sensoreinheit mit Spannungsmessvorrichtung
- 72: Sensoreinheit ohne Spannungsmessvorrichtung
- 73-79: freibleibend
- 80: Kalibrierung
- 81: Kalibration
- 100: Greifvorrichtung
- 101: Kontrolleinheit
- 102: Datenempfangs- und Sendeeinheit
- 103: Eingabe- und Ausgabeeinheit
- 104: Aktuatoreinheit
- 105: Datenspeichereinheit
- 106: Sensoranordnung

## Patentansprüche

1. Verfahren zum Betrieb einer Greifvorrichtung (100), aufweisend eine Greifanordnung mit Haltelementen (1), welche eine teilweise elastisch verformbare Struktur aufweisen, zum Halten eines umzuschlagenden Gutes, umfassend:
Messung eines Spannungszustandes (40) wenigstens eines der Haltelemente (1) mittels Spannungsmessvorrichtungen (71); und
Ermittlung eines momentanen Betriebszustandes (50) der Greifvorrichtung auf Basis des Spannungszustandes (40) des Haltelements (1); und
Steuerung der Greifvorrichtung auf Basis des ermittelten Betriebszustandes (50).

2. Verfahren nach Anspruch 1, wobei das Haltelement (1)
einen plattenförmig ausgebildeten Laschenkörper und
eine Sensoreinheit (70,71) aufweist, welche
Spannungsmessvorrichtungen umfasst.

3. Verfahren nach Anspruch 2, wobei das Haltelement ferner
mit einem an einer Flachseite des Laschenkörpers ausgebildeten Befestigungsbereich (2) an dem der Laschenkörper an einer Trägervorrichtung fixierbar ist und
mit einem an der Flachseite ausgebildeten Haltebereich (3), über den eine Haltekraft auf das umzuschlagende Gut aufbringbar ist, ausgebildet ist, wobei
der Laschenkörper aus einem FVK-Werkstoff ausgebildet ist, und
zwischen dem Befestigungsbereich (2) und dem Haltebereich (3) ein Biegebereich (4) ausgebildet ist, in dem der Laschenkörper bei auf das umzuschlagende Gut aufgebrachter Haltekraft elastisch verformbar ist, und wobei
der Biegebereich (4) gegenüber dem Befestigungsbereich (2) und/oder dem Haltebereich (3) eine reduzierte Biegefestigkeit aufweist, und
die Spannungsmessvorrichtungen (71) Dehnungsmesstreifen umfassen.

4. Verfahren nach einem der Ansprüche 2 oder 3, wobei
die Sensoreinheit (71) so an dem Haltelement (1) vorgesehen ist, dass mittels der Dehnungsmessstreifen eine Spannung in einem Bereich des Haltelements (1) gemessen werden kann, welcher elastisch verformbar ist.

5. Verfahren nach Anspruch 1 bis 4, wobei
die Greifvorrichtung (100) insbesondere eine Baustoffgreifvorrichtung (100) zum Umschlag einer Baustoffelementlage ist, und
das umzuschlagende Gut die Baustoffelementlage ist.

6. Verfahren nach einem der Ansprüche 1 bis 5, wobei
der momentane Betriebszustand (50) einen quantitativen Wert der momentan durch das Haltelement auf das umzuschlagende Gut aufgebrachte Haltekraft umfasst.

7. Verfahren nach einem der Ansprüche 1 bis 6, wobei
der momentane Betriebszustand (50) eine Berührung des Haltelements (1) oder der Greifanordnung mit einer Umgebung der Greifvorrichtung (100) umfasst.

8. Verfahren nach einem der Ansprüche 1 bis 7, wobei
der momentane Betriebszustand (50) eine Position des Haltelements (1) oder der Greifanordnung relativ zu der Umgebung der Greifvorrichtung (100) umfasst.

9. Verfahren nach einem der Ansprüche 1 bis 8, wobei
der momentane Betriebszustand (50) einen Anlagenzustand einer Anlage, in welcher die Greifvorrichtung (100) eingesetzt ist, umfasst.

10. Verfahren nach einem der Ansprüche 1 bis 9, wobei
der momentane Betriebszustand (50) einen Zustand des umzuschlagenden Gutes (52) umfasst.

11. Verfahren nach Anspruch 10, wobei
der Zustand des umzuschlagenden Gutes (52) eine relative Anordnung zueinander oder ein Fehlen von Teilen des umzuschlagenden Gutes umfasst.

12. Verfahren nach einem der Ansprüche 10 oder 11, wobei
der Zustand des umzuschlagenden Gutes (52) eine Größe des umzuschlagenden Gutes oder eine Größe von Teilen des umzuschlagenden Gutes umfasst.

13. Verfahren nach Anspruch 10, wobei der Zustand des umzuschlagenden Gutes (52) eine Präsenz von dafür vorgesehenen, haptisch erfassbaren, Markierungen umfasst.

14. Verfahren nach einem der Ansprüche 1 bis 13, wobei
die Steuerung der Greifvorrichtung (100) eine Optimierung eines Betriebszyklus der Greifvorrichtung (100) umfasst.

15. Verfahren nach einem der Ansprüche 1 bis 14, wobei
die Steuerung der Greifvorrichtung (100) eine Optimierung eines Betriebszyklus der Anlage, in welcher die Greifvorrichtung (100) eingesetzt ist, umfasst.

16. Verfahren nach einem der Ansprüche 1 bis 15, wobei
die Steuerung der Greifvorrichtung (100) eine Vermeidung oder Neutralisierung von Kollisionen des Haltelements (1) oder der Greifanordnung mit der Umgebung der Greifvorrichtung (100) umfasst.

17. Greifvorrichtung (100) zum Halten eines umzuschlagenden Gutes, umfassend:
Greifanordnung mit wenigstens einem Haltelement (1), an welchem eine Sensoreinheit (70) ausgebildet ist, wobei
die Sensoreinheit (71) Dehnungsmesstreifen umfasst, und
eine Steuerungseinheit, welche zur Durchführung des Verfahrens nach einem der Ansprüche 1 bis 16 ausgebildet ist.

18. Greifvorrichtung (100) nach Anspruch 17, wobei
die Sensoreinheit (71) so an dem Haltelement (1) vorgesehen ist, dass mittels der Dehnungsmessstreifen eine Spannung in einem Bereich des Haltelements (1) gemessen werden kann, welcher elastisch verformbar ist.

19. Verwendung der Greifvorrichtung (100) nach einem der Ansprüche 17 oder 18 zur Durchführung des Verfahrens nach einem der Ansprüche 1 bis 16.
